# EUROPEAN PATENT SPECIFICATION

(11) **EP 3 978 340 B1**
(45) Date of publication and mention of the grant of the patent: **04.09.2024**
(21) Application number: 20835391.2
(22) Date of filing: 01.07.2020
(51) Int. Cl.: B62J 15/00, B62K 5/027, B62K 5/05, B62K 5/10, B62J 25/00

(54) **LEANING VEHICLE**
NEIGEFAHRZEUG
VÉHICULE INCLINABLE

(30) Priority: 01.07.2019 JP 2019123219
(43) Date of publication of application: 06.04.2022
(73) Proprietor: Yamaha Hatsudoki Kabushiki Kaisha, Iwata-shi, Shizuoka 438-8501 (JP)
(72) Inventor: KURAKAKE, Haruhito, Iwata-shi, Shizuoka 438-8501 (JP); UCHIYAMA, Katsuhiro, Iwata-shi, Shizuoka 438-8501 (JP)
(74) Representative: Zimmermann, Tankred Klaus
(86) International application number: PCT/JP2020/025902
(87) International publication number: WO 2021/002404

(56) References cited:
- EP-A1- 2 921 387
- WO-A1-2018/216727
- JP-A- 2017 094 906
- US-A- 4 020 914
- US-A- 4 787 470
- US-A1- 2007 176 384
- US-A1- 2015 321 721

## Description

### TECHNICAL FIELD

The present teaching relates to a leaning vehicle.

### BACKGROUND ART

There has been known a standing-type leaning vehicle in which a driver places the left foot on a left foot step and the right foot on a right foot step. As such a leaning vehicle, Non-patent Document 1, for example, discloses a standing-type motorcycle.

In the motorcycle of Non-patent Document 1, the left foot step and the right foot step are individually fixed to a vehicle body frame. The left foot step is located between a front wheel and a rear wheel when seen in the left-right direction of the motorcycle, and further leftward than the front wheel and the rear wheel. The right foot step is located between the front wheel and the rear wheel when seen in the left-right direction of the motorcycle, and further rightward than the front wheel and the rear wheel.

A front portion of the motorcycle of Non-patent Document 1 is provided with a water-splash prevention member for preventing the feet of the driver from getting wet by water splashed on the front wheel. Since the water-splash prevention member is attached to a member supporting the front wheel, when the front wheel rotates about a steering shaft, the water-splash prevention member rotates to the left or to the right together with the front wheel.

Patent Document 1 discloses a vehicle including a vehicle body frame, a left front wheel, a right front wheel, a left suspension supporting the left front wheel, a right suspension supporting the right front wheel, and a linkage mechanism located further upward than the left front wheel and the right front wheel and configured to shift positions of the left front wheel and the right front wheel relative to the vehicle body frame so that the vehicle body frame leans to the left or to the right of the vehicle. The linkage mechanism includes an upper cross member and a lower cross member extending in the left-right direction, a right side member rotatably supporting right ends of the upper cross member and the lower cross member, and a left side member rotatably supporting left ends of the upper cross member and the lower cross member.

The vehicle disclosed in Patent Document 1 includes a load transfer mechanism that transfers a load to the linkage mechanism. The load transfer mechanism includes a left-foot-placing part and a right-foot-placing part. The left-foot-placing part includes a left-foot-placing face and a left coupling member. The right-foot-placing part includes a right-foot-placing face and a right coupling member. The left foot of a standing driver is placed on the left-foot-placing face. The left coupling member couples the left-foot-placing face and the left side member to each other. The right foot of the standing driver is placed on the right-foot-placing face. The left coupling member couples the left-foot-placing face and the left side member to each other. The document US 2007/176384 A1 discloses a leaning vehicle in accordance with the preamble of claim 1.

### CITATION LIST

### PATENT DOCUMENT

Patent Document 1: International Patent Application Publication No. 2018/216727

### NON-PATENT DOCUMENT

Non-patent Document 1: "glafit [press release]," glafit inc. [searched on June 12, 2020], Internet (https://glafit.com/news/pr20200528)

### SUMMARY OF INVENTION

### THECHNICAL PROBLEM

In a vehicle in which a left-foot-placing face is located behind a left front wheel and a right-foot-placing face is placed behind a right front wheel as described in Patent Document 1, while the vehicle is traveling on a wet road, water splashed on the left front wheel and the right front wheel might spatter onto the feet of the driver.

In view of this, it is conceivable to provide the vehicle with a left-water-splash-prevention member for preventing the foot of a driver from getting wet by water splashed on the left front wheel and a right-water-splash-prevention member for preventing the foot of the driver from getting wet by water splashed on the right front wheel. In a case where a member supporting the left front wheel includes a large left-water-splash-prevention member that prevents the foot of the driver from getting wet by water splashed on the left front wheel and a member supporting the right front wheel includes a large right-water-splash-prevention member that prevents the foot of the driver from getting wet by water splashed on the right front wheel, when the left front wheel and the right front wheel are steered to rotate to the left or to the right, the left-water-splash-prevention member rotates together with the left front wheel, and the right-water-splash-prevention member rotates together with the right front wheel. Thus, the vehicle needs a space for allowing the large left-water-splash-prevention member to rotate between the left front wheel and a left coupling part and a space for allowing the large right-water-splash-prevention member between the right front wheel and a right coupling part.

In the case of providing the space between the left front wheel and the left coupling part as described above, the left coupling part needs to be shifted rearward or upward relative to the left front wheel. In the case of providing the space by shifting the left coupling part rearward, the length of the vehicle in the front-rear direction increases.

On the other hand, in the case of providing the space as described above by shifting the left coupling part upward, a head pipe needs to be disposed to detour the space serving as a rotation region of the left front wheel and the left-water-splash-prevention member. Thus, the head pipe, which is desirably disposed at a low position in the vehicle, cannot be disposed at the low position, and thus, it is difficult to allow the vehicle to have a compact configuration in the top-bottom direction. Similarly to the case of providing the space between the left front wheel and the left coupling part as described above, in the case of providing the space between the right front wheel and the right coupling part, it is also difficult to allow the vehicle to have a compact configuration in the front-rear direction and the top-bottom direction.

It is therefore an object of the present teaching to provide a leaning vehicle including a left front wheel and a right front wheel with a configuration capable of preventing the feet of a driver from getting wet by water splashed on the left front wheel and the right front wheel while obtaining a compact size of the vehicle.

### SOLUTION TO PROBLEM

The inventors of the present teaching studied a configuration capable of preventing the feet of a driver from getting wet by water splashed on a left front wheel and a right front wheel during traveling of a leaning vehicle on a wet road surface.

Through an intensive study, the inventors of the present teaching arrived at the following configuration.

A leaning vehicle according to one embodiment of the present teaching is configured to lean leftward when turning to the left and lean rightward when turning to the right, and includes: a vehicle body frame; a linkage mechanism supported by the vehicle body frame and including a cross part comprising a an upper cross part , a lower cross part , and extending in a left-right direction of the vehicle body frame, a left side part, and a right side part, a left end of the cross part being rotatably coupled to the left side part, a right end of the cross part being rotatably coupled to the right side part; a left front wheel supported by the left side part to be rotatable about a left steering axis and to be non-displaceable in an axial direction of the left steering axis; a right front wheel supported by the right side part to be rotatable about a right steering axis and to be non-displaceable in an axial

direction of the right steering axis; a left foot step located further rearward than the left front wheel and having a left-foot-placing face on which a left foot of a driver is placed; a right foot step located further rearward than the right front wheel and having a right-foot-placing face on which a right foot of the driver is placed; a left-foot-step-coupling part coupling the left foot step to the left side part; and a right-foot-step-coupling part coupling the right foot step to the right side part. The leaning vehicle includes: a left front guard supported by the left-foot-step-coupling part between the left foot step and the left front wheel; and a right front guard supported by the right-foot-step-coupling part between the right foot step and the right front wheel. When the vehicle body frame leans to the left of the leaning vehicle, the left side part of the linkage mechanism is located, by the linkage mechanism, further upward than the right side part in the top-bottom direction of the vehicle body frame. When the vehicle body frame leans to the right of the leaning vehicle, the right side part of the linkage mechanism is located, by the linkage mechanism, further upward than the left side part in the top-bottom direction of the vehicle body frame. While the leaning vehicle leans, a positional relationship of the left front guard to the vehicle body frame in a top-bottom direction of the vehicle body frame changes by the linkage mechanism and a positional relationship of the left front guard to the left side part and the left foot step in the top-bottom direction of the vehicle body frame does not change. While the left front wheel rotates about the left steering axis, the left front guard does not rotate together with the left front wheel and a positional relationship of the left front guard to the left side part and the left foot step does not change. While the leaning vehicle leans, a positional relationship of the right front guard to the vehicle body frame in the top-bottom direction of the vehicle body frame changes by the linkage mechanism and a positional relationship of the right front guard to the right side part and the right foot step in the top-bottom direction of the vehicle body frame does not change. While the right front wheel rotates about the right steering axis, the right front guard does not rotate together with the right front wheel and a positional relationship of the right front guard to the right side part and the right foot step does not change.

In the leaning vehicle, the left front guard is supported by the left-foot-step-coupling part between the left foot step and the left front wheel such that while the leaning vehicle leans, the positional relationship of the left front guard to the vehicle body frame in the top-bottom direction of the vehicle body frame changes and the positional relationship of the left front guard to the left side part and the left foot step in the top-bottom direction of the vehicle body frame does not change and that while the left front wheel rotates about the left steering axis, the left front guard does not rotate together with the left front wheel and the positional relationship of the left front guard to the left side part and the left foot step does not change.

Accordingly, even in a case where the leaning vehicle leans or a case where the left front wheel rotates about the left steering axis, the left foot of a driver placed on the left foot step can be covered with the left front guard from the front. Thus, it is possible to prevent the left foot of the driver from getting wet by water splashed on the left front wheel.

The right front guard is supported by the right-foot-step-coupling part between the right foot step and the right front wheel such that while the leaning vehicle leans, the positional relationship of the right front guard to the vehicle body frame in the top-bottom direction of the vehicle body frame changes and the positional relationship of the right front guard to the right side part and the right foot step in the top-bottom direction of the vehicle body frame does not change and that while the right front wheel rotates about the right steering axis, the right front guard does not rotate together with the right front wheel and the positional relationship of the right front guard to the right side part and the right foot step does not change.

Accordingly, even in a case where the leaning vehicle leans or a case where the right front wheel rotates about the right steering axis, the right foot of a driver placed on the right foot step can be covered with the right front guard from the front. Thus, it is possible to prevent the right foot of the driver from getting wet by water splashed on the right front wheel.

In addition, in the leaning vehicle described above, the left front guard is supported by the left-foot-step-coupling part such that the left front guard does not rotate together with the left front wheel while the left front wheel rotates about the left steering axis. The right front guard is supported by the right-foot-step-coupling part such that the right front guard does not rotate together with the right front wheel while the right front wheel rotates about the right steering axis. That is, in the leaning vehicle described above, it is unnecessary to provide a space for allowing the left front guard to rotate between the left front wheel and the left coupling part and a space for allowing the right front guard to rotate between the right front wheel and the right coupling part.

Thus, the configuration described above eliminates necessity for shifting the left-foot-step-coupling part rearward relative to the left front wheel and necessity for shifting the right-foot-step-coupling part rearward relative to the right front wheel. As a result, the vehicle is allowed to have a compact configuration in the front-rear direction. Since the configuration described above eliminates necessity for providing a space for installing a large-size water-splash prevention member above each of the left front wheel and the right front wheel, the vehicle is allowed to have a compact configuration in the top-bottom direction.

With the configuration described above, the leaning vehicle including the left front wheel and the right front wheel has a configuration capable of preventing the feet of a driver from getting wet by water splashed on the left front wheel and the right front wheel while making the vehicle size compact.

In another aspect, the leaning vehicle preferably has the following configuration. The left front guard extends along the left-foot-step-coupling part. The right front guard extends along the right-foot-step-coupling part.

With this configuration, the front of the left foot step coupled to the left-foot-step-coupling part can be more reliably covered with the left front guard. This can further ensure prevention of the left foot of a driver placed on the left foot step from getting wet by water splashed on the left front wheel.

In addition, the front of the right foot step coupled to the right-foot-step-coupling part can be more reliably covered with the right front guard. This can further ensure prevention of the right foot of the driver placed on the right foot step from getting wet by water splashed on the right front wheel.

In another aspect, the leaning vehicle preferably has the following configuration. The left front guard overlaps with the left front wheel when seen in a front-rear direction of the leaning vehicle and overlaps with the left front wheel when seen in a top-bottom direction of the leaning vehicle. The right front guard overlaps with the right front wheel when seen in the front-rear direction of the leaning vehicle and overlaps with the right front wheel when seen in the top-bottom direction of the leaning vehicle.

With this configuration, a rear portion and an upper portion of the left front wheel can be more reliably covered with the left front guard. Thus, the left front guard can further ensure prevention of water splashed on the left front wheel from spattering on the left foot of the driver.

In addition, a rear portion and an upper portion of the right front wheel can be more reliably covered with the right front guard. Thus, the right front guard can further ensure prevention of water splashed on the right front wheel from spattering on the right foot of the driver.

In another aspect, the leaning vehicle preferably has the following configuration. The left-foot-step-coupling part is located at the rear of the left front wheel, and extends downward toward the rear from the left side part along the left front wheel, a front portion of the left-foot-step-coupling part being connected to the left side part, a rear portion of the left-foot-step-coupling part supporting a front portion of the left foot step. The right-foot-step-coupling part is located at the rear of the right front wheel, and extends downward toward the rear from the right side part along the right front wheel, a front portion of the right-foot-step-coupling part being connected to the right side part, a rear portion of the right-foot-step-coupling part supporting a front portion of the right foot step.

With this configuration, the gap between the left front wheel and the left-foot-step-coupling part can be reduced. Accordingly, the left front guard attached to the left-foot-step-coupling part can be disposed closer to the left front wheel. Thus, the left front guard can further ensure prevention of water splashed on the left front wheel from spattering on the left foot of the driver.

In addition, the gap between the right front wheel and the right-foot-step-coupling part can be reduced. Accordingly, the right front guard attached to the right-foot-step-coupling part can be disposed closer to the right front wheel. Thus, the right front guard can further ensure prevention of water splashed on the right front wheel from spattering on the right foot of the driver.

In another aspect, the leaning vehicle preferably has the following configuration. A lower end of the left front guard is located at the same height as or below a front end of the left-foot-placing face of the left foot step. A lower end of the right front guard is located at the same height as or below a front end of the right-foot-placing face of the right foot step.

With this configuration, the front of the foot steps can be more reliably covered with the front guards. Accordingly, it is possible to prevent water splashed on the left front wheel from spattering on the left foot of the driver from below the left front guard. It is also possible to prevent water splashed on the right front wheel from spattering on the right foot of the driver from below the right front guard.

In another aspect, the leaning vehicle preferably has the following configuration. Each of the left foot step and the right foot step has a waterproof structure that does not allow water from passing through the structure in the top-bottom direction.

With this configuration, it is possible to prevent water splashed on the left front wheel from passing through the left foot step in the top-bottom direction and spattering on the left foot of the driver. In addition, it is also possible to prevent water splashed on the right front wheel from passing through the right foot step in the top-bottom direction and spattering on the right foot of the driver.

In another aspect, the leaning vehicle preferably has the following configuration. The leaning vehicle further includes: a left side guard having a plate shape extending in the top-bottom direction and a front-rear direction, attached to at least one of the left foot step or the left-foot-step-coupling part such that the left side guard is located at the right of the left foot step, and guarding a left foot of a driver; and a right side guard having a plate shape extending in the top-bottom direction and the front-rear direction, attached to at least one of the right foot step or the right-foot-step-coupling part such that the right side guard is located at the left of the right foot step, and guarding a right foot of the driver. A right end of the left foot step is located at the right of a left face of the left side guard. A left end of the right foot step is located at the left of a right face of the right side guard.

With this configuration, the right side guard can prevent water splashed on the left front wheel during traveling of the leaning vehicle from spattering on the right foot of the driver, for example. Similarly, the left side guard can prevent water splashed on the right front wheel during traveling of the leaning vehicle from spattering on the left foot of the driver, for example.

The right end of the left foot step is located at the right of the left face of the left side guard. Accordingly, the left foot step can more reliably cover the bottom of the left side guard. Thus, it is possible to prevent water splashed on the right front wheel from spattering on the left foot of the driver from under the left foot step. The left end of the right foot step is located at the left of the right face of the right side guard. Accordingly, the right foot step can more reliably cover the bottom of the right side guard. Thus, it is possible to prevent water splashed on the left front wheel from spattering on the right foot of the driver from under the right foot step.

The terminology used herein is for the purpose of describing particular embodiments only and is not intended to be limiting of the invention.

As used herein, the term "and/or" includes any and all combinations of one or more of the associated listed items.

It will be further understood that the terms "including," "comprising" or "having" and variations thereof when used in this specification specify the presence of stated features, steps, elements, components, and/or their equivalents but do not preclude the presence or addition of one or more steps, operations, elements, components, and/or groups thereof.

It will be further understood that the terms "mounted," "connected," "coupled," and/or their equivalents are used broadly and encompass both direct and indirect mounting, connecting and coupling. Further, "connected" and "coupled" are not restricted to physical or mechanical connections or couplings, and can include connections or couplings, whether direct or indirect.

Unless otherwise defined, all terms (including technical and scientific terms) used herein have the same meaning as commonly understood by one having ordinary skill in the art to which this invention belongs.

It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

In describing the invention, it will be understood that a number of techniques and steps are disclosed. Each of these has individual benefit and each can also be used in conjunction with one or more, or in some cases all, of the other disclosed techniques.

An embodiment of a leaning vehicle according to the present teaching will be herein described.

In the following description, numerous specific details are set forth in order to provide a thorough understanding of the present invention. It will be evident, however, to one skilled in the art that the present invention may be practiced without these specific details.

The present disclosure is to be considered as an exemplification of the invention, and is not intended to limit the invention to the specific embodiments illustrated by the figures or description below.

### [Leaning Vehicle]

A leaning vehicle herein is a vehicle that turns in a leaning posture. Specifically, the leaning vehicle is a vehicle that leans leftward when turning to the left and leans rightward when turning to the right. The leaning vehicle may be a single-passenger vehicle or a vehicle on which a plurality of passengers can ride.

### [Rear Portion of Front Wheel]

A rear portion of a front wheel herein refers to a portion of the front wheel rearward of a wheel shaft that is a rotation center of the front wheel.

### [Upper Portion of Front Wheel]

An upper portion of the front wheel herein refers to a portion of the front wheel above the wheel shaft that is a rotation center of the front wheel.

### [Lower End of Left Coupling Part]

A lower end of a left coupling part herein is a part of a lower portion of the left coupling part and located in a region where water splashed on the left front wheel is spattered on the left foot of the driver. The lower end of the left coupling part is an end of the left coupling part close to a left-foot-placing part to which the left coupling part is connected.

### [Lower End of Right Coupling Part]

A lower end of a right coupling part herein is a part of a lower portion of the right coupling part and located in a region where water splashed on the right front wheel is spattered on the right foot of the driver. The lower end of the right coupling part is an end of the right coupling part close to a right-foot-placing part to which the right coupling part is connected.

### ADVANTAGEOUS EFFECTS OF INVENTION

In one embodiment of the present teaching, it is possible to provide a leaning vehicle including a left front wheel and a right front wheel with a configuration capable of preventing the feet of a driver from getting wet by water splashed on the left front wheel and the right front wheel while obtaining a compact size of the vehicle.

### BRIEF DESCRIPTION OF DRAWINGS

[FIG. 1] FIG. 1 is a left side view illustrating an overall configuration of a leaning vehicle according to one embodiment.
[FIG. 2] FIG. 2 is a left side view of the leaning vehicle in a state where a main frame cover is detached.
[FIG. 3] FIG. 3 is a front view illustrating a configuration of a vehicle front portion when the leaning vehicle is seen from the front.
[FIG. 4] FIG. 4 is a top view illustrating a configuration of the leaning vehicle.
[FIG. 5] FIG. 5 is a view schematically illustrating a positional relationship between a left-foot-placing part and a left front guard when the leaning vehicle is seen from the left.
[FIG. 6] FIG. 6 is a view schematically illustrating a positional relationship between the left-foot-placing part and the left side guard and a positional relationship between a right-foot-placing part and a right side guard when the leaning vehicle is seen from the front.
[FIG. 7] FIG. 7 is a perspective view illustrating a linkage mechanism in an enlarged manner.
[FIG. 8] FIG. 8 is a rear view illustrating a configuration of the leaning vehicle.
[FIG. 9] FIG. 9 is a front view illustrating a configuration of the leaning vehicle that leans leftward.
[FIG. 10] FIG. 10 is a rear view illustrating a configuration of the leaning vehicle that leans leftward.
[FIG. 11] FIG. 11 is a perspective view of the leaning vehicle when the leaning vehicle is seen from the right front.
[FIG. 12] FIG. 12 is a perspective view of the leaning vehicle when the leaning vehicle is seen from the right rear.
[FIG. 13] FIG. 13(a) is a rear view schematically illustrating a configuration of the leaning vehicle in an upright state, FIG. 13(b) is a rear view schematically illustrating a configuration of the leaning vehicle in a leaning state, and FIG. 13(c) is a top view schematically illustrating a relationship between front wheels and the left and right front guards, in the leaning vehicle in a state where a left front wheel turns about a left steering axis and a right front wheel turns about a right steering axis.

### DESCRIPTION OF EMBODIMENT

An embodiment will be described hereinafter with reference to the drawings. In the drawings, the same or corresponding parts are denoted by the same reference numerals, and description thereof will not be repeated. The dimensions of components in the drawings do not strictly represent actual dimensions of the components and dimensional proportions of the components.

In the following description, arrow F in the drawings represents a forward direction of a leaning vehicle 1. Arrow B in the drawings represents a rearward direction of the leaning vehicle 1. Arrow U in the drawings represents an upward direction of the leaning vehicle 1. Arrow D in the drawings represents a downward direction of the leaning vehicle 1. Arrow R in the drawings represents a rightward direction of the leaning vehicle 1. Arrow L in the drawings represents a leftward direction of the leaning vehicle 1. A front-rear direction, a left-right direction, and a top-bottom direction of the leaning vehicle 1 refer to a front-rear direction, a left-right direction, and a top-bottom direction, respectively, with respect to the leaning vehicle 1 when seen from a driver of the leaning vehicle 1.

The leaning vehicle 1 according to this embodiment turns with a vehicle body frame leaning leftward or rightward with respect to a vertical direction. Thus, in addition to the directions with respect to the vehicle, directions with respect to the vehicle body frame are defined as follows. Arrow FF in the drawings represents a forward direction of the vehicle body frame. Arrow FB in the drawings represents a rearward direction of the vehicle body frame. Arrow FU in the drawings represents an upward direction of the vehicle body frame. Arrow FD in the drawings represents a downward direction of the vehicle body frame. Arrow FR in the drawings represents a rightward direction of the vehicle body frame. Arrow FL in the drawings represents a leftward direction of the vehicle body frame. A front-rear direction, a left-right direction, and a top-bottom direction of the vehicle body frame refer to a front-rear direction, a left-right direction, and a top-bottom direction, respectively, with respect to the vehicle body frame when seen from a driver of the leaning vehicle.

### (Overall Configuration)

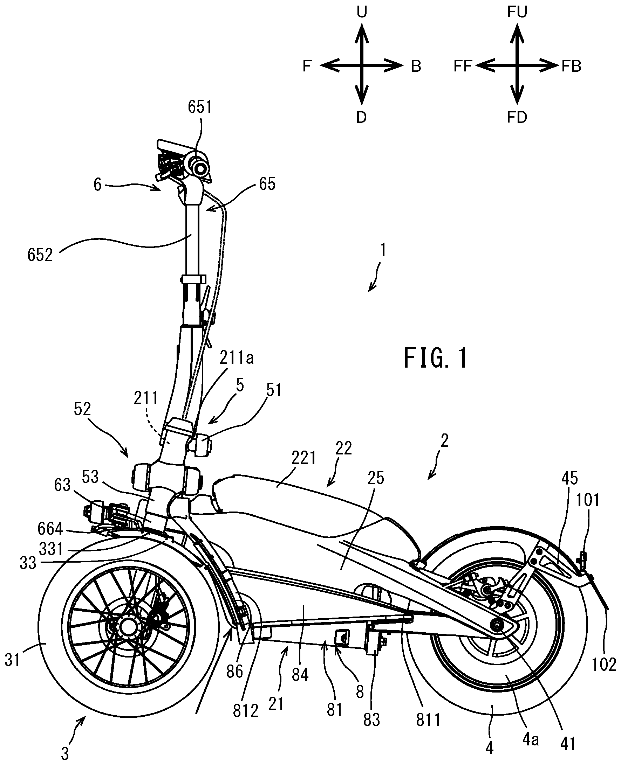

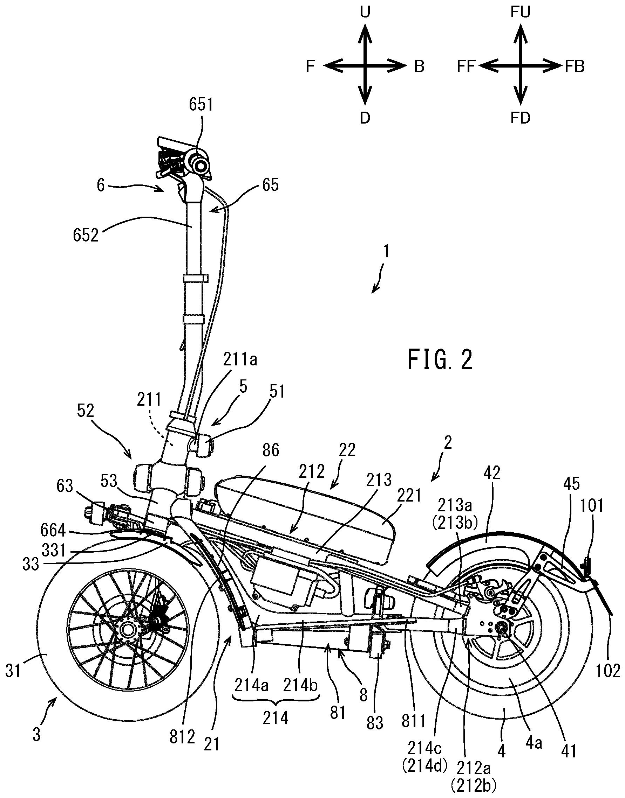

FIG. 1 is a left side view schematically illustrating an overall configuration of the leaning vehicle 1 according to the embodiment. FIG. 2 is a left side view illustrating a state where a main frame cover 25 is detached in the leaning vehicle 1. The leaning vehicle 1 includes a vehicle body 2, a pair of left and right front wheels 3, a rear wheel 4, a linkage mechanism 5, a steering mechanism 6, and a load transfer mechanism 8. That is, the leaning vehicle 1 according to this embodiment is a three-wheeled vehicle including the pair of left and right front wheels 3. The leaning vehicle 1 is also a vehicle that leans leftward when turning to the left and leans rightward when turning to the right.

The leaning vehicle 1 does not include a seat on which a driver is seated. That is, the leaning vehicle 1 is a so-called standing-type vehicle which a standing driver drives while standing. The leaning vehicle 1 does not include a rear arm supporting the rear wheel 4. The rear wheel 4 of the leaning vehicle 1 is supported by a vehicle body frame 21, described later. The leaning vehicle 1 does not include buffer devices that elastically support the front wheels 3 and the rear wheel 4 such that the front wheels 3 and the rear wheel 4 are allowed to be displaced. The front wheels 3 and the rear wheel 4 of the leaning vehicle 1 are supported on the vehicle body frame 21, described later, without interposition of buffer devices.

The vehicle body 2 includes the vehicle body frame 21 and a power unit 22. In FIGS. 1 and 2, the vehicle body frame 21 is in an upright state. In the case of referring to FIGS. 1 and 2, the following description is based on a premise that the vehicle body frame 21 is in the upright state. The upright state of the vehicle body frame 21 refers to a state where the top-bottom direction of the vehicle body frame 21 coincides with the vertical direction.

As illustrated in FIG. 2, the vehicle body frame 21 supports the power unit 22, for example. The vehicle body frame 21 includes a head pipe 211 (linkage support part) and a main frame 212.

The head pipe 211 is located in a front portion of the leaning vehicle 1. When the leaning vehicle 1 is seen from the left, an upper portion of the head pipe 211 is located further rearward than a lower portion of the head pipe 211 in the front-rear direction of the vehicle body frame 21. The linkage mechanism 5 is disposed around the head pipe 211. A steering shaft 652, described later, is rotatably inserted in the head pipe 211.

The main frame 212 is connected to the head pipe 211. The main frame 212 is located further rearward than the head pipe 211 in the front-rear direction of the vehicle body frame 21. The main frame 212 supports the power unit 22. A rear end of the main frame 212 supports the rear wheel 4 such that the rear wheel 4 is rotatable about a wheel shaft 41. As illustrated in FIG. 1, the main frame 212 is covered with the main frame cover 25. The main frame cover 25 is supported by the main frame 212. The main frame cover 25 is a resin member.

As illustrated in FIG. 2, the main frame 212 includes an upper frame 213 and an under frame 214.

When the vehicle body frame 21 is seen from the left, the upper frame 213 extends rearward in the front-rear direction of the vehicle body frame 21 and downward in the top-bottom direction of the vehicle body frame 21 from the head pipe 211 toward the rear wheel 4. A rear end of the upper frame 213 is branched into two parts respectively located at the left and right of the rear wheel 4. Specifically, the upper frame 213 includes an upper-frame-left-rear end 213a located at the left of the rear wheel 4 and an upper-frame-right-rear end 213b located at the right of the rear wheel 4. The upper-frame-left-rear end 213a and the upper-frame-right-rear end 213b support the rear wheel 4 together with an under-frame-left-rear end 214c and an under-frame-right-rear end 214d, described later. The power unit 22 is supported by the upper frame 213.

The under frame 214 includes an under-frame-front portion 214a and an under-frame-rear portion 214b. When the vehicle body frame 21 is seen from the left, the under-frame-front portion 214a extends from the head pipe 211 rearward in the front-rear direction of the vehicle body frame 21 and downward in the top-bottom direction of the vehicle body frame 21. A front end of the under-frame-front portion 214a is connected to the head pipe 211.

The under-frame-rear portion 214b extends rearward from a rear end of the under-frame-front portion 214a in the front-rear direction of the vehicle body frame 21. A rear end of the under-frame-rear portion 214b is branched into two parts respectively located at the left and right of the rear wheel 4. Specifically, the under-frame-rear portion 214b includes the under-frame-left-rear end 214c located at the left of the rear wheel 4 and the under-frame-right-rear end 214d located at the right of the rear wheel 4.

The under-frame-left-rear end 214c is connected to the upper-frame-left-rear end 213a. The connection between the under-frame-left-rear end 214c and the upper-frame-left-rear end 213a constitutes a main-frame-left-rear end 212a. The under-frame-right-rear end 214d is connected to the upper-frame-right-rear end 213b. The connection between the under-frame-right-rear end 214d and the upper-frame-right-rear end 213b constitutes a main-frame-right-rear end 212b. The main-frame-left-rear end 212a and the main-frame-right-rear end 212b support the rear wheel 4.

The main frame 212 includes the upper frame 213 and the under frame 214 described above so that strength and stiffness of the main frame 212 can be thereby enhanced. In a case where the height of the main frame in the top-bottom direction of the vehicle body frame is reduced, the main frame may include only the under frame.

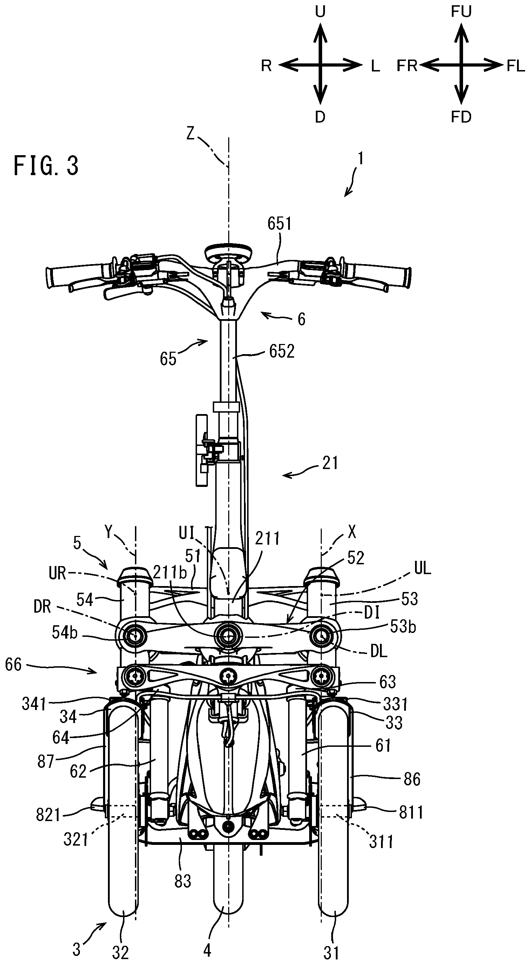

FIG. 3 is a front view of a front portion of the leaning vehicle 1 when seen from the front. In FIG. 3, the vehicle body frame 21 is in an upright state. In the case of referring to FIG. 3, the following description is based on a premise that the vehicle body frame 21 is in the upright state.

As illustrated in FIGS. 1 through 3, the pair of left and right front wheels 3 is located further downward than the head pipe 211 and the linkage mechanism 5 in the top-bottom direction of the vehicle body frame 21. As illustrated in FIG. 2, the pair of left and right front wheels 3 is supported by a left suspension part 61 and a right suspension part 62, described later.

As illustrated in FIGS. 1 and 2, the rear wheel 4 is located further rearward than the pair of left and right front wheels 3 in the front-rear direction of the vehicle body frame 21.

The power unit 22 generates a driving force for causing the leaning vehicle 1 to travel. As illustrated in FIG. 2, the power unit 22 is located further forward than the wheel shaft 41 of the rear wheel 4 in the front-rear direction of the vehicle body frame 21. The power unit 22 is fixed to the vehicle body frame 21. The power unit 22 includes an unillustrated motor and a battery 221. In this embodiment, the motor is disposed in a wheel 4a of the rear wheel 4. Electric power is supplied to the motor from the battery 221 fixed to the upper frame 213 of the vehicle body frame 21.

As illustrated in FIG. 3, the pair of left and right front wheels 3 includes a left front wheel 31 and a right front wheel 32. The left front wheel 31 is located further leftward than the head pipe 211 that is a part of the vehicle body frame 21 in the left-right direction of the vehicle body frame 21. The right front wheel 32 is located further rightward than the head pipe 211 in the left-right direction of the vehicle body frame 21. That is, the left front wheel 31 and the right front wheel 32 are disposed side by side in the left-right direction of the vehicle body frame 21.

As illustrated in FIG. 3, the left front wheel 31 is connected to the left suspension part 61. Specifically, the left front wheel 31 is connected to a lower portion of the left suspension part 61. The left front wheel 31 is supported by the left suspension part 61 to be rotatable about a left axle 311. The left axle 311 is disposed in the lower portion of the left suspension part 61 and extends in the left-right direction of the vehicle body frame 21.

The right front wheel 32 is connected to the right suspension part 62. Specifically, the right front wheel 32 is connected to a lower portion of the right suspension part 62. The right front wheel 32 is supported by the right suspension part 62 to be rotatable about a right axle 321. The right axle 321 is disposed in the lower portion of the right suspension part 62 and extends in the left-right direction of the vehicle body frame 21.

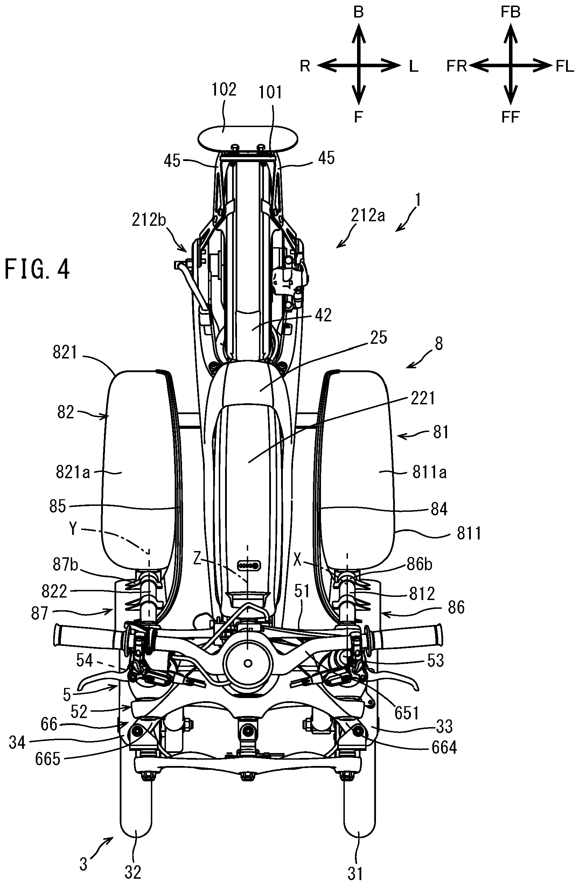

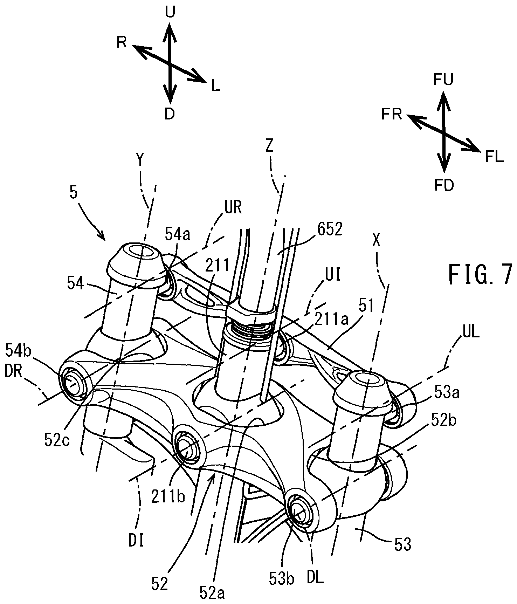

FIG. 4 is a top view of the leaning vehicle 1 when seen from above in the top-bottom direction of the vehicle body frame 21. FIG. 7 is a perspective view illustrating the linkage mechanism 5 in an enlarged manner. In FIGS. 4 and 7, the vehicle body frame 21 is in an upright state. In the case of referring to FIGS. 4 and 7, the following description is based on a premise that the vehicle body frame 21 is in the upright state.

The linkage mechanism 5 is a linkage mechanism of a parallel four-bar linkage (also referred to as a parallelogram linkage) type.

As illustrated in FIGS. 1 through 3, the linkage mechanism 5 is located further downward than a handlebar 651 in the top-bottom direction of the vehicle body frame 21. The linkage mechanism 5 is located further upward than the left front wheel 31 and the right front wheel 32 in the top-bottom direction of the vehicle body frame 21.

As illustrated in FIGS. 1 through 3 and FIG. 7, the linkage mechanism 5 includes an upper cross part 51, a lower cross part 52, a left side part 53, and a right side part 54. The linkage mechanism 5 is not interlocked with rotation of the steering shaft 652 about an intermediate steering axis Z caused by operation of the handlebar 651. That is, the linkage mechanism 5 does not rotate about the intermediate steering axis Z with respect to the vehicle body frame 21. The upper cross part 51 and the lower cross part 52 correspond to a cross part.

As illustrated in FIG. 1, the upper cross part 51 is located further rearward than the head pipe 211 in the front-rear direction of the vehicle body frame 21. As illustrated in FIG. 3, the upper cross part 51 extends in the left-right direction of the vehicle body frame 21.

As illustrated in FIGS. 1 and 2, the lower cross part 52 is located further downward than the upper cross part 51 in the top-bottom direction of the vehicle body frame 21. As illustrated in FIG. 3, the lower cross part 52 extends in the left-right direction of the vehicle body frame 21.

As illustrated in FIG. 7, the lower cross part 52 has a through hole 52a through which the head pipe 211 penetrates, in a center portion of the lower cross part 52 in the left-right direction. In the left-right direction of the vehicle body frame 21, the lower cross part 52 has a left notch 52b in which the left side part 53 is located at the left end thereof, and a right notch 52c in which the right side part 54 is located at the right end thereof.

As illustrated in FIGS. 3 and 4, the left side part 53 is located at the left of the head pipe 211 in the left-right direction of the vehicle body frame 21. The left side part 53 is located further upward than the left front wheel 31 in the top-bottom direction of the vehicle body frame 21. The left side part 53 extends in the direction in which the head pipe 211 extends. The left side part 53 extends in the direction in which the intermediate steering axis Z of the steering shaft 652 extends. An upper portion of the left side part 53 is located further rearward than a lower portion of the left side part 53 in the front-rear direction of the vehicle body frame 21.

The right side part 54 is located at the right of the head pipe 211 in the left-right direction of the vehicle body frame 21. The right side part 54 is located further upward than the right front wheel 32 in the top-bottom direction of the vehicle body frame 21. The right side part 54 extends in the direction in which the head pipe 211 extends. The right side part 54 extends in the direction in which the intermediate steering axis Z of the steering shaft 652 extends. An upper portion of the right side part 54 is located further rearward than a lower portion of the right side part 54 in the front-rear direction of the vehicle body frame 21.

As illustrated in FIG. 7, the head pipe 211 includes an upper-intermediate-coupling part 211a and a lower-intermediate-coupling part 211b.

An intermediate portion of the upper cross part 51 is rotatably coupled to the head pipe 211 through the upper-intermediate-coupling part 211a. That is, the upper cross part 51 is rotatable with respect to the head pipe 211 about an upper-intermediate-coupling axis UI (intermediate axis) passing through the upper-intermediate-coupling part 211a and extending in the front-rear direction of the vehicle body frame 21.

An intermediate portion of the lower cross part 52 is rotatably coupled to the head pipe 211 through the lower-intermediate-coupling part 211b. That is, the lower cross part 52 is rotatable with respect to the head pipe 211 about a lower-intermediate-coupling axis DI (intermediate axis) passing through the lower-intermediate-coupling part 211b and extending in the front-rear direction of the vehicle body frame 21.

The left side part 53 includes an upper-left-coupling part 53a and a lower-left-coupling part 53b.

A left end of the upper cross part 51 is rotatably coupled to the left side part 53 through the upper-left-coupling part 53a. That is, the upper cross part 51 is rotatable with respect to the left side part 53 about an upper-left-coupling axis UL (left axis) passing through the upper-left-coupling part 53a and extending in the front-rear direction of the vehicle body frame 21.

A left end of the lower cross part 52 is rotatably coupled to the left side part 53 through the lower-left-coupling part 53b. That is, the lower cross part 52 is rotatable with respect to the left side part 53 about a lower-left-coupling axis DL (left axis) passing through the lower-left-coupling part 53b and extending in the front-rear direction of the vehicle body frame 21.

The right side part 54 includes an upper-right-coupling part 54a and a lower-right-coupling part 54b.

A right end of the upper cross part 51 is rotatably coupled to the right side part 54 through the upper-right-coupling part 54a. That is, the upper cross part 51 is rotatable with respect to the right side part 54 about an upper-right-coupling axis UR (right axis) passing through the upper-right-coupling part 54a and extending in the front-rear direction of the vehicle body frame 21.

The right end of the lower cross part 52 is rotatably coupled to the right side part 54 through the lower-right-coupling part 54b. That is, the lower cross part 52 is rotatable with respect to the right side part 54 about a lower-right-coupling axis DR (right axis) passing through the lower-right-coupling part 54b and extending in the front-rear direction of the vehicle body frame 21.

The upper-intermediate-coupling axis UI, the upper-right-coupling axis UR, the upper-left-coupling axis UL, the lower-intermediate-coupling axis DI, the lower-right-coupling axis DR, and the lower-left-coupling axis DL extend in parallel. The upper-intermediate-coupling axis UI, the upper-right-coupling axis UR, the upper-left-coupling axis UL, the lower-intermediate-coupling axis DI, the lower-right-coupling axis DR, and the lower-left-coupling axis DL are located further upward than the left front wheel 31 and the right front wheel 32 in the top-bottom direction of the vehicle body frame 21.

As described above, the upper cross part 51, the lower cross part 52, the left side part 53, and the right side part 54 are supported by the vehicle body frame 21 such that the upper cross part 51 and the lower cross part 52 are kept in parallel with each other, and the left side part 53 and the right side part 54 are kept in parallel with each other.

As illustrated in FIG. 3, the steering mechanism 6 includes the left suspension part 61, the right suspension part 62, a left bracket 63, a right bracket 64, a steering member 65, and a steering-force-transfer mechanism 66. A configuration of the steering mechanism 6 is similar to that of a steering mechanism disclosed in International Patent Application Publication No. 2020/111254. Thus, the configuration of the steering mechanism 6 will not be described in detail. A steering operation of the leaning vehicle 1 using the steering mechanism 6 is also similar to a steering operation disclosed in International Patent Application Publication No. 2020/111254, and thus, will not be described in detail.

The left suspension part 61 supports the left front wheel 31 to the linkage mechanism 5. The left suspension part 61 extends in the direction in which the intermediate steering axis Z extends. A lower end of the left suspension part 61 supports the left front wheel 31. The left suspension part 61 supports the left front wheel 31 such that a gap between the left front wheel 31 and a left coupling part 812, described later, is not displaced. An upper end of the left suspension part 61 is fixed to the left bracket 63.

The left bracket 63 includes an unillustrated left rotating member in an upper portion thereof. The left rotating member is located inside the left side part 53 of the linkage mechanism 5 and extends in the direction in which the left side part 53 extends. The left rotating member is rotatable about a left steering axis X with respect to the left side part 53. That is, the left bracket 63 is rotatable about the left steering axis X with respect to the left side part 53. The left steering axis X extends in the direction in which the left side part 53 extends.

As illustrated in FIG. 3, the left steering axis X extends in the top-bottom direction of the vehicle body frame 21, in parallel with the intermediate steering axis Z of the steering shaft 652.

The right bracket 64 includes an unillustrated right rotating member in an upper portion thereof. The right rotating member is located inside the right side part 54 of the linkage mechanism 5 and extends in the direction in which the right side part 54 extends. The right rotating member is rotatable about a right steering axis Y with respect to the right side part 54. That is, the right bracket 64 is rotatable about the right steering axis Y with respect to the right side part 54. The right steering axis Y extends in the direction in which the right side part 54 extends.

The right suspension part 62 supports the right front wheel 32 to the linkage mechanism 5. The right suspension part 62 extends in the direction in which the intermediate steering axis Z extends. A lower end of the right suspension part 62 supports the right front wheel 32. The right suspension part 62 supports the right front wheel 32 such that a gap between the right front wheel 32 and a right coupling part 822, described later, is not displaced. An upper end of the right suspension part 62 is fixed to the right bracket 64.

As illustrated in FIG. 3, the right steering axis Y extends in the top-bottom direction of the vehicle body frame 21, in parallel with the intermediate steering axis Z of the steering shaft 652.

The steering member 65 includes the handlebar 651 and the steering shaft 652.

The handlebar 651 is connected to an upper portion of the steering shaft 652. A part of the steering shaft 652 is rotatably supported by the head pipe 211. The steering shaft 652 rotates about the intermediate steering axis Z in accordance with an operation on the handlebar 651 by a driver.

The steering-force-transfer mechanism 66 causes the left suspension part 61 to rotate about the left steering axis X in the rotation direction of the steering member 65 in accordance with rotation of the steering member 65. Similarly, the steering-force-transfer mechanism 66 causes the right suspension part 62 to rotate about the right steering axis Y in the rotation direction of the steering member 65 in accordance with rotation of the steering member 65. Accordingly, the steering-force-transfer mechanism 66 transfers a steering force to the left front wheel 31 and the right front wheel 32 in accordance with an operation on the steering member 65 by a driver. The left front wheel 31 and the right front wheel 32 rotate about the left steering axis X and the right steering axis Y, respectively, in a direction in accordance with the direction of operation on the steering member 65 by the driver.

An operation of the leaning vehicle 1 in which the leaning vehicle 1 leans leftward or rightward is similar to a lean operation disclosed in International Patent Application Publication No. 2020/111254. Thus, the operation in which the leaning vehicle 1 leans leftward or rightward will not be described in detail.

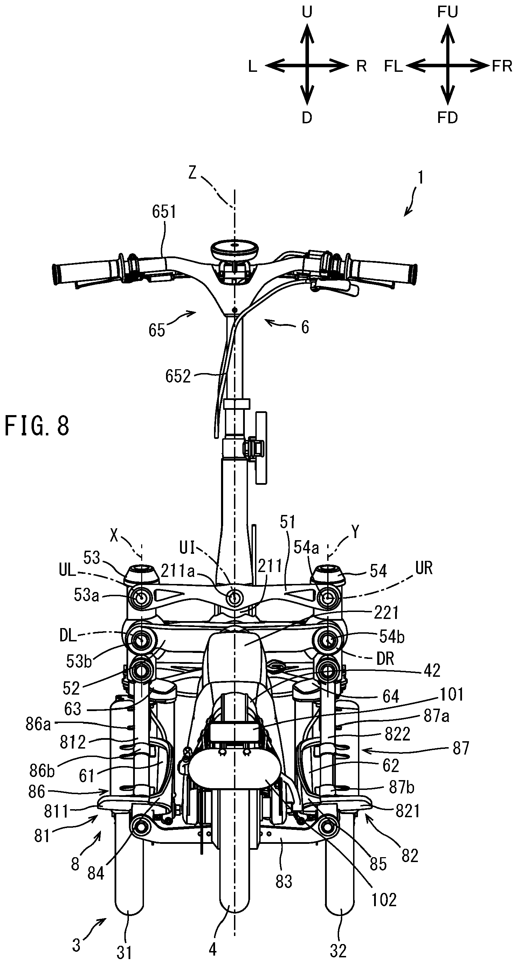

As illustrated in FIGS. 4 and 8, the load transfer mechanism 8 includes a left-foot-load-transfer part 81, a right-foot-load-transfer part 82, and a left-right-coupling member 83.

The left-foot-load-transfer part 81 includes a left-foot-placing part 811 (left foot step) and the left coupling part 812 (left-foot-step-coupling part).

The left-foot-placing part 811 includes a left-foot-placing face 811a on which the left foot of a standing driver is placed. The left-foot-placing part 811 has a waterproof structure that does not allow water to pass therethrough in the top-bottom direction. For example, the left-foot-placing part 811 has a plate shape that does not have through holes penetrating the left-foot-placing part 811 in the top-bottom direction. Accordingly, it is possible to prevent water splashed on the left front wheel 31 during traveling of the leaning vehicle 1 from spattering on the left foot of the driver from under the left-foot-placing part 811.

The left coupling part 812 couples the left-foot-placing part 811 and the left side part 53 of the linkage mechanism 5 to each other. As illustrated in FIG. 1, the left coupling part 812 extends from the left side part 53 rearward in the front-rear direction of the vehicle body frame 21 and downward in the top-bottom direction of the vehicle body frame 21, at the rear of the left front wheel 31 along the left front wheel 31. The state where the left coupling part 812 extends along the left front wheel 31 includes not only a case where the left coupling part 812 is curved in an arc shape when seen from the left, but also a case where the left coupling part 812 linearly tilts when seen from the left, a case where the left coupling part 812 has a curved shape when seen from the left, a case where the left coupling part 812 has a shape as a combination of a curve and a straight line when seen from the left, and a case where the left coupling part 812 has a shape as a combination of a plurality of straight lines at different angles when seen from the left. A rear end of the left coupling part 812 is coupled to the left-foot-placing part 811. The left-foot-load-transfer part 81 is configured to be capable of transferring a load of the driver input through the left-foot-placing part 811, to the left side part 53. The left coupling part may be integrated with the left side part.

As illustrated in FIGS. 4 and 8, the right-foot-load-transfer part 82 includes a right-foot-placing part 821 (right foot step) and the right coupling part 822 (right-foot-step-coupling part).

The right-foot-placing part 821 includes a right-foot-placing face 821a on which the right foot of a standing driver is placed. The right-foot-placing part 821 has a waterproof structure that does not allow water to pass therethrough in the top-bottom direction. For example, the right-foot-placing part 821 has a plate shape that does not have through holes penetrating the right-foot-placing part 821 in the top-bottom direction. Accordingly, it is possible to prevent water splashed on the right front wheel 32 during traveling of the leaning vehicle 1 from spattering on the right foot of the driver from under the right-foot-placing part 821.

The right coupling part 822 couples the right-foot-placing part 821 and the right side part 54 of the linkage mechanism 5 to each other. The right coupling part 822 extends from the right side part 54 rearward in the front-rear direction of the vehicle body frame 21 and downward in the top-bottom direction of the vehicle body frame 21, at the rear of the right front wheel 32 along the right front wheel 32. The state where the right coupling part 822 extends along the right front wheel 32 includes not only a case where the right coupling part 822 is curved in an arc shape when seen from the right, but also a case where the right coupling part 822 linearly tilts when seen from the right, a case where the right coupling part 822 has a curved shape when seen from the right, a case where the right coupling part 822 has a shape as a combination of a curve and a straight line when seen from the right, and a case where the right coupling part 822 has a shape as a combination of a plurality of straight lines at different angles when seen from the right. A rear end of the right coupling part 822 is coupled to the right-foot-placing part 821. The right-foot-load-transfer part 82 is configured to be capable of transferring a load of the driver input through the right-foot-placing part 821, to the right side part 54. The right coupling part may be integrated with the right side part.

With the configuration described above, a load applied to the left-foot-placing part 811 through the left foot of the driver and a load applied to the right-foot-placing part 821 through the right foot of the driver are individually adjusted to thereby control leaning of the vehicle body frame 21.

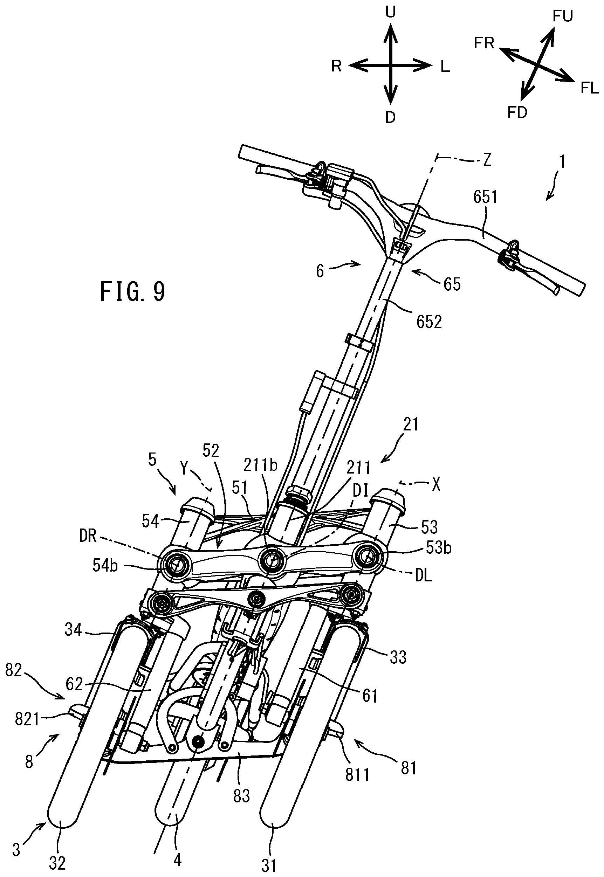

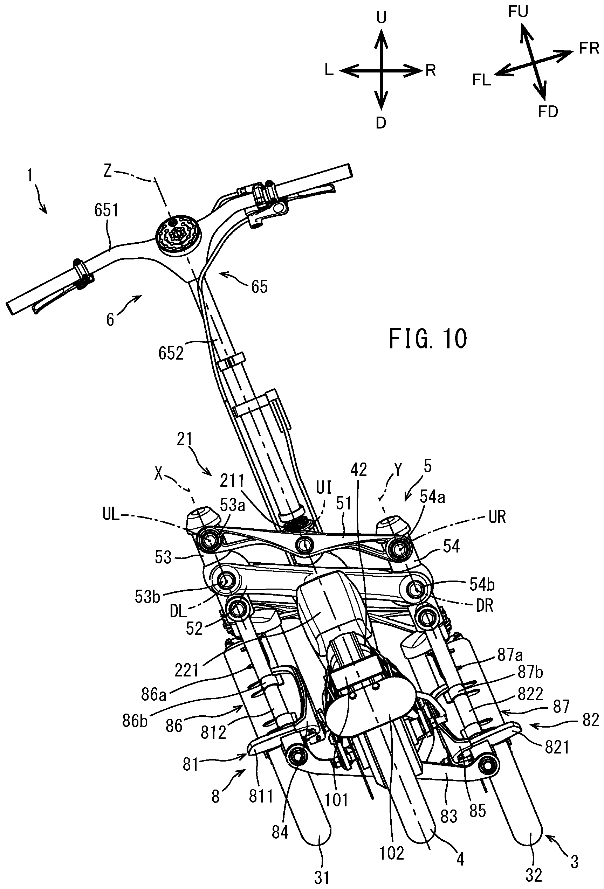

For example, as illustrated in FIGS. 9 and 10, when the vehicle body frame 21 leans to the left of the leaning vehicle 1, the left side part 53 is located further upward than the right side part 54 in the top-bottom direction of the vehicle body frame 21. FIG. 10 is a rear view of a front portion of the leaning vehicle 1 in a state where the vehicle body frame 21 leans leftward, when seen from the rear of the vehicle body frame 21.

When a load is applied by a left foot to the left side part 53 through the left-foot-placing part 811, a force is exerted to the left side part 53 such that the left side part 53 is displaced in the downward direction of the vehicle body frame 21. Accordingly, leftward leaning of the vehicle body frame 21 can be suppressed in the left-right direction of the leaning vehicle 1.

On the other hand, when the vehicle body frame 21 leans to the right of the leaning vehicle 1, the right side part 54 is located further upward than the left side part 53 in the top-bottom direction of the vehicle body frame 21. When a load is applied by a right foot to the right side part 54 through the right-foot-placing part 821, a force is exerted to the right side part 54 such that the right side part 54 is displaced in the downward direction of the vehicle body frame 21. Accordingly, rightward leaning of the vehicle body frame 21 can be suppressed in the left-right direction of the leaning vehicle 1.

When the vehicle body frame 21 leans leftward or rightward from the upright state, the normal direction to the placing face of the left-foot-placing part 811 and the normal direction to the placing face of the right-foot-placing part 821 change. However, an angle formed by the direction in which the head pipe 211 extends (the direction in which the intermediate steering axis Z extends) and the placing face of the left-foot-placing part 811 and the placing face of the right-foot-placing part 821 does not change. That is, the normal direction to the placing face of the left-foot-placing part 811 and the normal direction to the placing face of the right-foot-placing part 821 constantly coincide with the top-bottom direction of the vehicle body frame 21.

The left-right-coupling member 83 couples the left-foot-placing part 811 and the right-foot-placing part 821 to each other in the left-right direction of the vehicle body frame 21 under the vehicle body frame 21. In the left-right direction of the vehicle body frame 21, a center portion of the left-right-coupling member 83 is supported by a rotation support part (not shown) fixed to a lower portion of the under frame 214 of the vehicle body frame 21, to be rotatable about the under frame 214. Accordingly, in the top-bottom direction of the vehicle body frame 21, the left-right-coupling member 83 leans in the top-bottom direction in accordance with upward or downward movement of the left-foot-placing part 811 and the right-foot-placing part 821.

In this manner, the left-foot-placing part 811 and the right-foot-placing part 821 move upward or downward in an interlocked manner in accordance with an input of a load from the left foot to the left-foot-placing part 811 or an input of a load from the right foot to the right-foot-placing part 821. Thus, with the input of a load from the left foot to the left-foot-placing part 811 or the input of a load from the right foot to the right-foot-placing part 821 described above, leftward or rightward leaning of the vehicle body frame 21 can be easily suppressed.

### (Front Fender)

As illustrated in FIGS. 1 through 3, 9, and 11, the leaning vehicle 1 includes a left front fender 33 and a right front fender 34.

The left front fender 33 is located above the left front wheel 31 in the top-bottom direction of the vehicle body frame 21. As illustrated in FIGS. 1 and 2, the left front fender 33 has an arc shape along the left front wheel 31 when seen from the left. The left front fender 33 is disposed along the left front wheel 31 such that a gap between the left front fender 33 and the left front wheel 31 is smaller than a gap between the left front wheel 31 and the left coupling part 812. The left front fender 33 is attached to a left transfer plate 664 with a left-front-fender-attachment member 331 interposed therebetween, and the left transfer plate 664 is rotatably attached to a lower end of the left side part 53 of the linkage mechanism 5.

The left front fender 33 is disposed above the left front wheel 31 such that the left front fender 33 overlaps with a part of a left front guard 86, described later, when seen from above.

The left front fender 33 covers an upper portion of the left front wheel 31 within a range where the center angle is less than or equal to 90 degrees, when seen from the left. The left front fender 33 may cover the upper portion of the left front wheel 31 in a range where the center angle is greater than 90 degrees, when seen from the left.

The left front fender 33 as described above is located above the left front wheel 31 so that the left front fender 33 can prevent water splashed on the left front wheel 31 during traveling of the leaning vehicle 1 from spattering on the left foot of the driver.

In addition, the left front fender 33 is made in a small size and is attached to the left transfer plate 664 rotatably attached to the lower end of the left side part 53 of the linkage mechanism 5, with the left-front-fender-attachment member 331 interposed therebetween so that the left front fender 33 can be thereby supported by a simple structure. That is, the left front fender 33 of this embodiment is small in size, and thus, does not need to be supported at a plurality of points. Thus, interference of the left front fender 33 with other parts can be prevented.

Even in a case where vibrations occur in the left front fender 33 during traveling of the leaning vehicle 1, interference between the left front fender 33 and a left side guard 84, described later, or the left front guard 86 can be prevented because of size reduction of the left front fender 33 as described above.

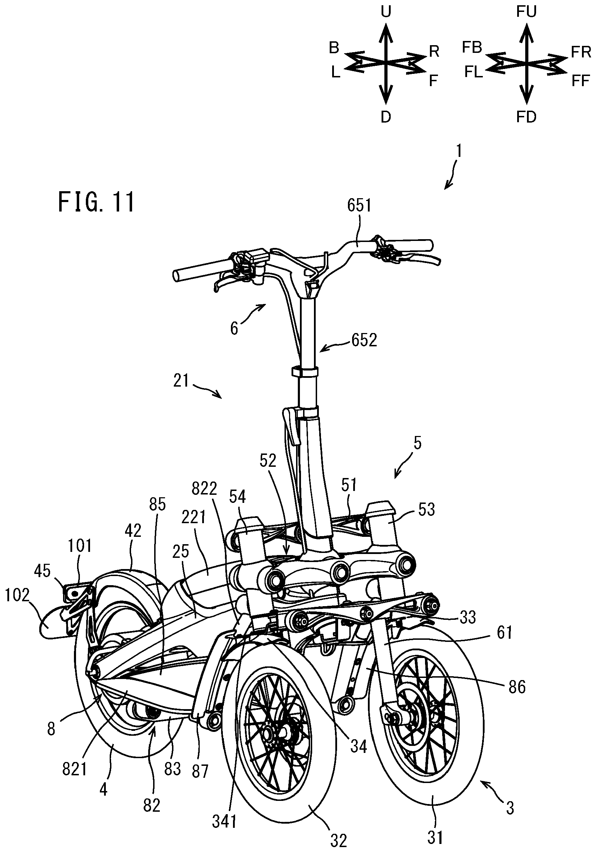

As illustrated in FIGS. 3 and 11, the right front fender 34 is located above the right front wheel 32 in the top-bottom direction of the vehicle body frame 21. The right front fender 34 has an arc shape along the right front wheel 32 when seen from the right. The right front fender 34 is disposed along the right front wheel 32 such that a gap between the right front fender 34 and the right front wheel 32 is smaller than a gap between the right front wheel 32 and the right coupling part 822, described later. The right front fender 34 is attached to a right transfer plate 665 with a right-front-fender-attachment member 341 interposed therebetween, and the right transfer plate 665 is rotatably attached to a lower end of the right side part 54 of the linkage mechanism 5, described later.

The right front fender 34 is disposed above the right front wheel 32 such that the right front fender 34 overlaps with a part of a right front guard 87, described later, when seen from above.

The right front fender 34 covers an upper portion of the right front wheel 32 within a range where the center angle is less than or equal to 90 degrees, when seen from the right. The right front fender 34 may cover the upper portion of the right front wheel 32 in a range where the center angle is greater than 90 degrees, when seen from the right.

The right front fender 34 as described above is located above the right front wheel 32 so that the right front fender 34 can prevent water splashed on the right front wheel 32 during traveling of the leaning vehicle 1 from spattering on the right foot of the driver.

In addition, the right front fender 34 is made in a small size and is attached to the right transfer plate 665 rotatably attached to the lower end of the right side part 54 of the linkage mechanism 5, with the right-front-fender-attachment member 341 interposed therebetween so that the right front fender 34 can be thereby supported by a simple structure. That is, the right front fender 34 of this embodiment is small in size, and thus, does not need to be supported at a plurality of points. Thus, interference of the right front fender 34 with other parts can be prevented.

Even in a case where vibrations occur in the right front fender 34 during traveling of the leaning vehicle 1, interference between the right front fender 34 and a right side guard 85, described later, or the right front guard 87 can be prevented because of size reduction of the right front fender 34 as described above.

### (Side Guard)

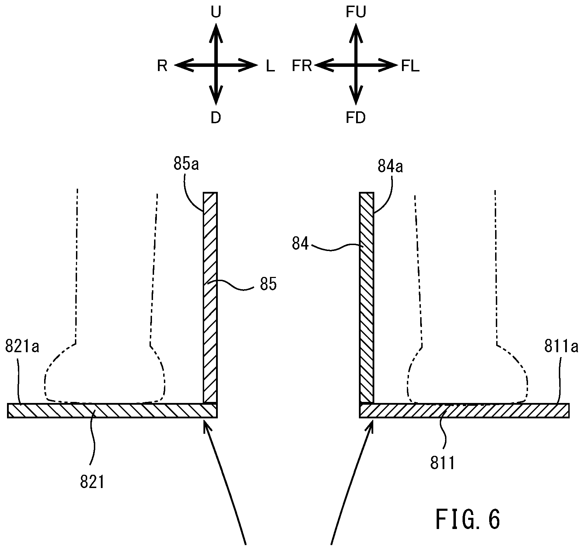

As illustrated in FIGS. 1, 6, 8, and 10 through 12, the leaning vehicle 1 includes the left side guard 84 and the right side guard 85. FIG. 6 is a view schematically illustrating a positional relationship between the left-foot-placing part 811 and the left side guard 84 and a positional relationship between the right-foot-placing part 821 and the right side guard 85 when the leaning vehicle 1 is seen from the front. In FIG. 6, solid arrows represent movement of water splashed on the wheels. FIG. 6 does not show a cross section, but illustrates the left-foot-placing part 811, the right-foot-placing part 821, the left side guard 84, and the right side guard 85 by hatching for explanation. In FIG. 6, dot-dot-dash lines represent the feet of a driver.

As illustrated in FIG. 1, the left side guard 84 is made of resin, and has a triangular plate shape extending in the top-bottom direction and in the front-rear direction in a side view. The left side guard 84 is fixed to a right end of the left-foot-placing part 811 and the left coupling part 812. Specifically, a lower end of the left side guard 84 is attached to the right end of the left-foot-placing part 811. In this embodiment, as illustrated in FIG. 6, the right end of the left-foot-placing part 811 is located further rightward than a left face 84a of the left side guard 84. Accordingly, it is possible to prevent water splashed on the left front wheel 31 during traveling of the leaning vehicle 1 from spattering on the left foot of a driver from under the left side guard 84.

As illustrated in FIG. 1, a front end of the left side guard 84 is attached to the left coupling part 812. In a state where the left side guard 84 is fixed to the left-foot-placing part 811 and the left coupling part 812, the height of the left side guard 84 in the top-bottom direction increases toward the front.

By disposing the left side guard 84 having the configuration described above at the right of the left-foot-placing part 811, the left foot placed on the left-foot-placing part 811 can be positioned and protected, and it is possible to prevent water splashed on the right front wheel 32 during traveling of the leaning vehicle 1 from spattering on the left foot of the driver. In particular, the left side guard 84 can prevent water splashed on the right front wheel 32 during traveling of the leaning vehicle 1 in a leaning state from spattering on the left foot of the driver.

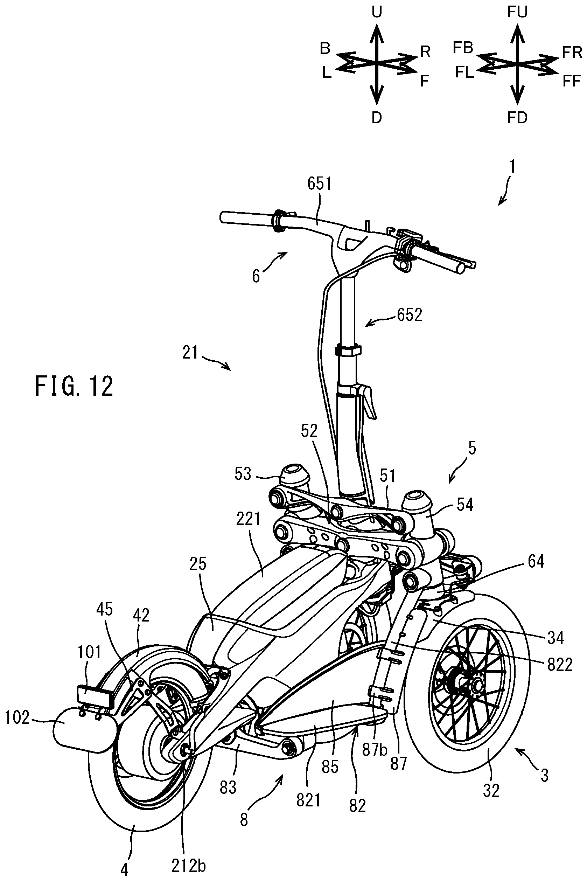

As illustrated in FIGS. 11 and 12, the right side guard 85 is made of resin, and has a triangular plate shape extending in the top-bottom direction and in the front-rear direction in a side view. The right side guard 85 is fixed to a left end of the right-foot-placing part 821 and the right coupling part 822. Specifically, a lower end of the right side guard 85 is attached to the left end of the right-foot-placing part 821. In this embodiment, the left end of the right-foot-placing part 821 is located further leftward than a right face 85a of the right side guard 85. Accordingly, it is possible to prevent water splashed on the right front wheel 32 during traveling of the leaning vehicle 1 from spattering on the right foot of the driver from under the right side guard 85.

As illustrated in FIG. 12, a front end of the right side guard 85 is attached to the right coupling part 822. In a state where the right side guard 85 is fixed to the right-foot-placing part 821 and the right coupling part 822, the height of the right side guard 85 in the top-bottom direction increases toward the front.

By disposing the right side guard 85 having the configuration described above at the left of the right-foot-placing part 821, the right foot placed on the right-foot-placing part 821 can be positioned and protected, and it is possible to prevent water splashed on the left front wheel 31 during traveling of the leaning vehicle 1 from spattering on the right foot of the driver, as illustrated in FIGS. 9 and 10. In particular, the right side guard 85 can prevent water splashed on the left front wheel 31 during traveling of the leaning vehicle 1 in a leaning state from spattering on the right foot of the driver.

### (Front Guard)

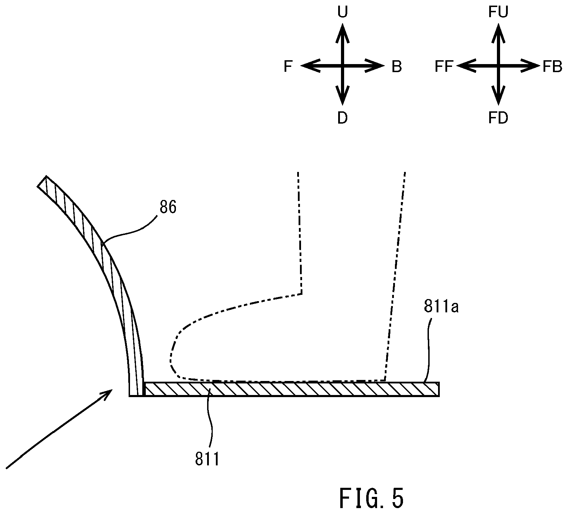

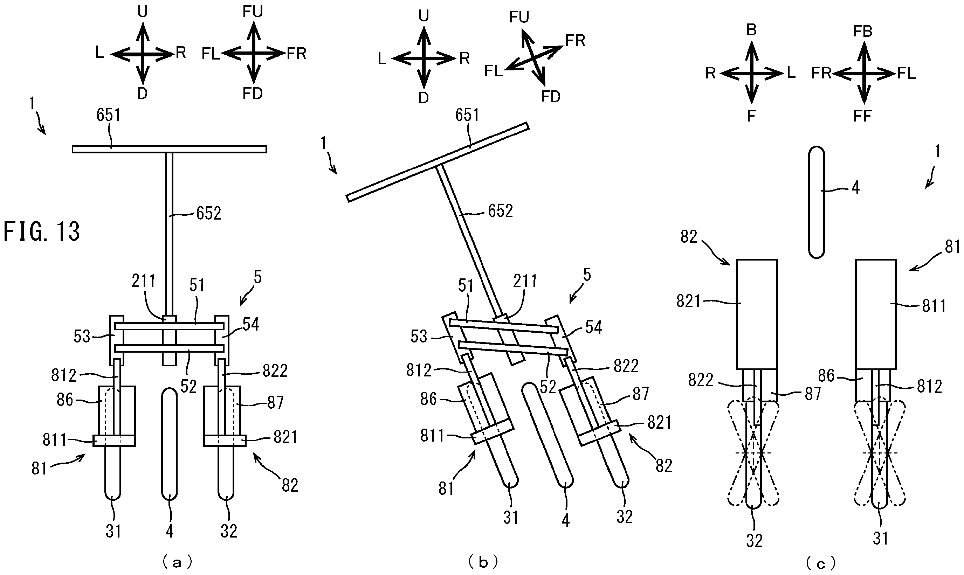

As illustrated in FIGS. 1, 5, 8, and 11 through 13, the leaning vehicle 1 includes the left front guard 86 and the right front guard 87. FIG. 5 is a view schematically illustrating a positional relationship between the left-foot-placing part 811 and the left front guard 86 when the leaning vehicle 1 is seen from the left. FIG. 13(a) is a rear view schematically illustrating a configuration of the leaning vehicle 1 in an upright state, FIG. 13(b) is a rear view schematically illustrating a configuration of the leaning vehicle 1 in a leaning state, and FIG. 13(c) is a top view schematically illustrating a relationship between the front wheels 3 and the left and right front guards 86 and 87, in the leaning vehicle 1 in a state where the left front wheel 31 turns about the left steering axis X and the right front wheel 32 turns about the right steering axis Y.

In FIGS. 1 and 5, solid arrows represent movement of water splashed on a wheel. In FIG. 5, the dot-dot-dash line represents a foot of a driver. In FIG. 13(c), dot-dot-dash lines represent rotation of the left front wheel 31 about the left steering axis X, and represent rotation of the right front wheel 32 about the right steering axis Y.

The left front guard 86 is attached to at least a lower end of the left coupling part 812 to cover at least a part of a rear portion of the left front wheel 31. As illustrated in FIG. 1, the lower end of the left coupling part 812 refers to a part of a lower portion of the left coupling part 812 located in a region where water splashed on the left front wheel 31 is spattered toward the left foot of the driver. In this embodiment, the left coupling part 812 extends from the left side part 53 to a height corresponding to the left axle 311 of the left front wheel 31. The left front guard 86 is attached to the left coupling part 812 to cover a part of the left front wheel 31 located behind the left axle 311.

Specifically, in this embodiment, the left front guard 86 extends upward from the lower end of the left coupling part 812 along the left coupling part 812. That is, the left front guard 86 is a resin plate member having a rectangular shape in plane view, and covers a rear portion and an upper portion of the left front wheel 31. The left front guard 86 is fixed to the left coupling part 812 such that the longitudinal direction of the left front guard 86 extends along the direction in which the left coupling part 812 extends. In this case, the left front guard 86 is attached to the front of the left coupling part 812.

The left front guard 86 may be disposed, with respect to the left coupling part 812, further downward than a region where a gap between the left coupling part 812 and the left front wheel 31 is smallest in the front-rear direction. Accordingly, it is possible to prevent water splashed on the left front wheel 31 from spattering on the left foot of the driver, which will be described later.

As described above, by providing the left front guard 86 in the left coupling part 812, as illustrated in FIGS. 13(a) and 13(b), while the leaning vehicle 1 is leaning, a positional relationship of the left front guard 86 to the vehicle body frame 21 in the top-bottom direction of the vehicle body frame 21 changes, whereas a positional relationship of the left front guard 86 to the left side part 53 and the left-foot-placing part 811 in the top-bottom direction of the vehicle body frame 21 does not change. That is, the position of the left front guard 86 in the top-bottom direction of the vehicle body frame 21 changes while the leaning vehicle 1 is leaning. On the other hand, since the left front guard 86 is fixed to the left coupling part 812 coupled to the left side part 53 and the left-foot-placing part 811, even while the leaning vehicle 1 leans, the position of the left front guard 86 to the left side part 53 and the left-foot-placing part 811 in the top-bottom direction of the vehicle body frame 21 does not change.

As illustrated in FIG. 13(c), while the left front wheel 31 turns about the left steering axis X, the left front guard 86 does not rotate together with the left front wheel 31, and the positional relationship of the left front guard 86 to the left side part 53 and the left-foot-placing part 811 does not change. The positional relationship of the left front guard 86 to the left side part 53 and the left-foot-placing part 811 while the left front wheel 31 rotates about the left steering axis X is a positional relationship in the front-rear direction, the left-right direction, and the top-bottom direction with respect to the leaning vehicle 1.

As described above, the left front guard 86 is supported by the left coupling part 812 between the left-foot-placing part 811 and the left front wheel 31 such that while the leaning vehicle 1 leans, the positional relationship of the left front guard 86 to the vehicle body frame 21 in the top-bottom direction of the vehicle body frame 21 changes whereas the positional relationship of the left front guard 86 to the left side part 53 and the left-foot-placing part 811 in the top-bottom direction of the vehicle body frame 21 does not change, and that while the left front wheel 31 rotates about the left steering axis X, the left front guard 86 does not rotate together with the left front wheel 31 and the positional relationship of the left front guard 86 to the left side part 53 and the left-foot-placing part 811 does not change.

Accordingly, even in the case where the leaning vehicle 1 leans or the case where the left front wheel 31 rotates about the left steering axis X, the left foot of the driver placed on the left-foot-placing part 811 can be covered with the left front guard 86 from the front. Thus, it is possible to prevent the left foot of the driver from getting wet by water splashed on the left front wheel 31.

The left front guard 86 includes, in a right portion thereof, a left-front-guard-first hook 86a and a pair of left-front-guard-second hooks 86b that are engaged with the left coupling part 812. The left-front-guard-first hook 86a and the pair of left-front-guard-second hooks 86b are arranged side by side in the longitudinal direction in the right portion of the left front guard 86, and project from the left front guard 86 to the right. The left-front-guard-first hook 86a and the pair of left-front-guard-second hooks 86b are integrally provided in the left front guard 86.

In a state where the left front guard 86 is attached to the left coupling part 812, the left-front-guard-first hook 86a is located ahead of the left coupling part 812 and the pair of left-front-guard-second hooks 86b is located at the rear of the left coupling part 812. Each of the left-front-guard-first hook 86a and the pair of left-front-guard-second hooks 86b has a semicircular shape when seen in the longitudinal direction of the left front guard 86 so as to extend along the outer shape of the left coupling part 812.

Accordingly, the left-front-guard-first hook 86a and the pair of left-front-guard-second hooks 86b are more reliably engaged with the left coupling part 812. This can further ensure fixing of the left front guard 86 to the left coupling part 812.

In the state where the left front guard 86 is fixed to the left coupling part 812, as illustrated in FIG. 5, the left front guard 86 extends to a position below the height of a front end of the left-foot-placing face 811a of the left-foot-placing part 811. The left front guard may extend to the same position as the height of the front end of the left-foot-placing face of the left-foot-placing part.

The left front guard 86 has such an arc shape so as to extend along the outer shape of the left front wheel 31 when seen from the left in the state where the left front guard 86 is fixed to the left coupling part 812 as described above. The left front guard 86 is located at a position overlapping with a part of the left front fender 33 when seen from above in the state where the left front guard 86 is fixed to the left coupling part 812 as described above. The lower end of the left front guard 86 is located at the front of the left-foot-placing part 811 in the state where the left front guard 86 is fixed to the left coupling part 812.

Accordingly, the left front guard 86 can prevent water splashed on the left front wheel 31 during traveling of the leaning vehicle 1 from spattering on the left foot of the driver. In addition, by fixing the left front guard 86 to the left coupling part 812 as described above, when the leaning vehicle 1 leans leftward, the left front guard 86 also leans leftward together with the left coupling part 812, and when the leaning vehicle 1 leans rightward, the left front guard 86 also leans rightward together with the left coupling part 812. Thus, the left front guard 86 can further ensure prevention of water splashed on the left front wheel 31 during traveling of the leaning vehicle 1 from spattering on the left foot of the driver.

In addition, since the left front guard 86 is located at a position overlapping with a part of the left front fender 33 when seen from above as described above, the left front guard 86 and the left front fender 33 can further ensure prevention of water splashed on the left front wheel 31 from spattering on the left foot of the driver in a case where the leaning vehicle 1 travels at relatively high speed.

Further, since the left front guard 86 is provided in addition to the left front fender 33, it is possible to allow the leaning vehicle 1 to lean leftward or rightward while preventing water splashed on the left front wheel 31 during traveling of the leaning vehicle 1 from spattering on the left foot of the driver.

Since the left front guard 86 extends to a position below the left-foot-placing face 811a as described above, it is possible to further ensure covering of the left-foot-placing part 811 with the left front guard 86. Accordingly, it is possible to prevent water splashed on the left front wheel 31 during traveling of the leaning vehicle 1 from spattering on the left foot of the driver from below the left front guard 86.

Furthermore, since the left front guard 86 is fixed to the left coupling part 812 as described above, the left front guard 86 does not rotate together with the left front wheel 31 in steering of the left front wheel 31. Thus, no space where the left front guard 86 rotates is needed between the left front wheel 31 and the left coupling part 812, and a gap between the left front wheel 31 and the left coupling part 812 can be reduced. The left front wheel 31 of the leaning vehicle 1 is supported on the vehicle body frame 21 without using a buffer device. Accordingly, the gap between the left front wheel 31 and the left coupling part 812 is not displaced so that the gap can be thereby reduced.

The right front guard 87 is attached to at least the lower end of the right coupling part 822 to cover at least a part of a rear portion of the right front wheel 32. As illustrated in FIG. 1, the lower end of the right coupling part 822 refers to a part of a lower portion of the right coupling part 822 located in a region where water splashed on the right front wheel 32 spatters toward the right foot of the driver. In this embodiment, the right coupling part 822 extends from the right side part 54 to a height corresponding to the right axle 321 of the right front wheel 32. The right front guard 87 is attached to the right coupling part 822 to cover a part of the right front wheel 32 located behind the right axle 321.

Specifically, in this embodiment, the right front guard 87 extends upward from the lower end of the right coupling part 822 along the right coupling part 822. That is, the right front guard 87 is a resin plate member having a rectangular shape in plane view, and covers a rear portion and an upper portion of the right front wheel 32. The right front guard 87 is fixed to the right coupling part 822 such that the longitudinal direction of the right front guard 87 extends along a direction in which the right coupling part 822 extends. In this case, the right front guard 87 is attached to the front of the right coupling part 822.

The right front guard 87 may be disposed, with respect to the right coupling part 822, further downward than a region where the gap between the right coupling part 822 and the right front wheel 32 in the front-rear direction is smallest. Accordingly, it is possible to prevent water splashed on the right front wheel 32 from spattering on the right foot of the driver, which will be described later.

As described above, by providing the right front guard 87 in the right coupling part 822, as illustrated in FIGS. 13(a) and 13(b), while the leaning vehicle 1 is leaning, a positional relationship of the right front guard 87 to the vehicle body frame 21 in the top-bottom direction of the vehicle body frame 21 changes, whereas a positional relationship of the right front guard 87 to the right side part 54 and the right-foot-placing part 821 in the top-bottom direction of the vehicle body frame 21 does not change. That is, the position of the right front guard 87 in the top-bottom direction of the vehicle body frame 21 changes while the leaning vehicle 1 is leaning. On the other hand, since the right front guard 87 is fixed to the right coupling part 822 coupled to the right side part 54 and the right-foot-placing part 821, even while the leaning vehicle 1 leans, the position of the right front guard 87 to the right side part 54 and the right-foot-placing part 821 in the top-bottom direction of the vehicle body frame 21 does not change.

As illustrated in FIG. 13(c), while the right front wheel 32 turns about the right steering axis Y, the right front guard 87 does not rotate together with the right front wheel 32, and the positional relationship of the right front guard 87 to the right side part 54 and the right-foot-placing part 821 does not change. The positional relationship of the right front guard 87 to the right side part 54 and the right-foot-placing part 821 while the right front wheel 32 rotates about the right steering axis Y is a positional relationship in the front-rear direction, the left-right direction, and the top-bottom direction with respect to the leaning vehicle 1.

As described above, the right front guard 87 is supported by the right coupling part 822 between the right-foot-placing part 821 and the right front wheel 32 such that the positional relationship of the right front guard 87 to the vehicle body frame 21 in the top-bottom direction of the vehicle body frame 21 changes whereas the positional relationship of the right front guard 87 to the right side part 54 and the right-foot-placing part 821 in the top-bottom direction of the vehicle body frame 21 does not change while the leaning vehicle 1 leans and that the right front guard 87 does not rotate together with the right front wheel 32 and the positional relationship of the right front guard 87 to the right side part 54 and the right-foot-placing part 821 does not change while the right front wheel 32 rotates about the right steering axis Y.

Accordingly, even in the case where the leaning vehicle 1 leans or the case where the right front wheel 32 rotates about the right steering axis Y, the right foot of a driver placed on the right-foot-placing part 821 can be covered with the right front guard 87 from the front. Thus, it is possible to prevent the right foot of the driver from getting wet by water splashed on the right front wheel 32.

The right front guard 87 includes, in a left portion thereof, a right-front-guard-first hook 87a and a pair of right-front-guard-second hooks 87b that are engaged with the right coupling part 822. The right-front-guard-first hook 87a and the pair of right-front-guard-second hooks 87b are arranged side by side in the longitudinal direction in the left portion of the right front guard 87, and project from the right front guard 87 to the left. The right-front-guard-first hook 87a and the pair of right-front-guard-second hooks 87b are integrally provided in the right front guard 87.

In a state where the right front guard 87 is attached to the right coupling part 822, the right-front-guard-first hook 87a is located ahead of the right coupling part 822, and the pair of right-front-guard-second hooks 87b is located at the rear of the right coupling part 822. Each of the right-front-guard-first hook 87a and the pair of right-front-guard-second hooks 87b is formed in a semicircular shape when seen in the longitudinal direction of the right front guard 87 so as to extend along the outer shape of the right coupling part 822.

Accordingly, the right-front-guard-first hook 87a and the pair of right-front-guard-second hooks 87b are more reliably engaged with the right coupling part 822. This can further ensure fixing of the right front guard 87 to the right coupling part 822.

Although not specifically shown, in the state where the right front guard 87 is fixed to the right coupling part 822, the right front guard 87 extends to a position below the height of a front end of the right-foot-placing face 821a of the right-foot-placing part 821. The right front guard 87 may extend to the same position as the height of the front end of the right-foot-placing face 821a of the right-foot-placing part 821.

The right front guard 87 has such an arc shape as to extend along the outer shape of the right front wheel 32 when seen from the right in the state where the right front guard 87 is fixed to the right coupling part 822 as described above. The right front guard 87 is located at a position overlapping with a part of the right front fender 34 when seen from above in the state where the right front guard 87 is fixed to the right coupling part 822 as described above. A lower end of the right front guard 87 is located at the front of the right-foot-placing part 821 in the state where the right front guard 87 is fixed to the right coupling part 822.

Accordingly, the right front guard 87 can prevent water splashed on the right front wheel 32 during traveling of the leaning vehicle 1 from spattering on the right foot of the driver. In addition, by fixing the right front guard 87 to the right coupling part 822 as described above, when the leaning vehicle 1 leans leftward, the right front guard 87 also leans leftward together with the right coupling part 822, and when the leaning vehicle 1 leans rightward, the right front guard 87 also leans rightward together with the right coupling part 822. Thus, the right front guard 87 can further ensure prevention of water splashed on the right front wheel 32 during traveling of the leaning vehicle 1 from spattering on the right foot of the driver.

In addition, since the right front guard 87 is located at a position overlapping with a part of the right front fender 34 when seen from above as described above, the right front guard 87 and the right front fender 34 can further ensure prevention of water splashed on the right front wheel 32 from spattering on the right foot of the driver in a case where the leaning vehicle 1 travels at relatively high speed.

Further, since the right front guard 87 is provided in addition to the right front fender 34, it is possible to allow the leaning vehicle 1 to lean leftward or rightward while preventing water splashed on the right front wheel 32 during traveling of the leaning vehicle 1 from spattering on the right foot of the driver.

Since the right front guard 87 extends to a position below the right-foot-placing face 821a as described above, it is possible to further ensure covering of the right-foot-placing part 821 with the right front guard 87. Accordingly, it is possible to prevent water splashed on the right front wheel 32 during traveling of the leaning vehicle 1 from spattering on the right foot of the driver from below the right front guard 87.

Furthermore, since the right front guard 87 is fixed to the right coupling part 822 as described above, the right front guard 87 does not rotate together with the right front wheel 32 in steering of the right front wheel 32. Thus, no space where the right front guard 87 rotates is needed between the right front wheel 32 and the right coupling part 822, and a gap between the right front wheel 32 and the right coupling part 822 can be reduced. The right front wheel 32 of the leaning vehicle 1 is supported on the vehicle body frame 21 without using a buffer device. Accordingly, the gap between the right front wheel 32 and the right coupling part 822 is not displaced so that the gap can be thereby reduced.

As illustrated in FIGS. 1, 2, 4, 8, 11, and 12, the leaning vehicle 1 includes a rear fender 42. The rear fender 42 is supported by the main frame 212 in each of a front portion and a rear portion. A pair of license-plate-support members 45 is connected to the rear fender 42, and supports a reflector 101 and a license plate 102.

The leaning vehicle 1 according to this embodiment includes: the vehicle body frame 21; the linkage mechanism supported by the vehicle body frame 21 and including the upper cross part 51, the lower cross part 52, the left side part 53, and the right side part 54; the left front wheel 31 supported by the left side part 53 to be rotatable about the left steering axis X and to be non-displaceable in the axial direction of the left steering axis X; the right front wheel 32 supported by the right side part 54 to be rotatable about the right steering axis Y and to be non-displaceable in the axial direction of the right steering axis Y; the left-foot-placing part 811 located further rearward than the left front wheel 31 and having the left-foot-placing face 811a on which the left foot of a driver is placed; the right-foot-placing part 821 located further rearward than the right front wheel 32 and having the right-foot-placing face 821a on which the right foot of the driver is placed; the left coupling part 812 coupling the left-foot-placing part 811 to the left side part 53; and the right coupling part 822 coupling the right-foot-placing part 821 to the right side part 54. The leaning vehicle 1 leans leftward when turning to the left, and leans rightward when turning to the right.

The leaning vehicle 1 includes: the left front guard 86 supported by the left coupling part 812 between the left-foot-placing part 811 and the left front wheel 31 such that while the leaning vehicle 1 leans, a positional relationship of the left front guard 86 to the vehicle body frame 21 in the top-bottom direction of the vehicle body frame 21 changes and a positional relationship of the left front guard 86 to the left side part 53 and the left-foot-placing part 811 in the top-bottom direction of the vehicle body frame 21 does not change and that while the left front wheel 31 rotates about the left steering axis X, the left front guard 86 does not rotate together with the left front wheel 31 and a positional relationship of the left front guard 86 to the left side part 53 and the left-foot-placing part 811 does not change; and the right front guard 87 supported by the right coupling part 822 between the right-foot-placing part 821 and the right front wheel 32 such that while the leaning vehicle 1 leans, a positional relationship of the right front guard 87 to the vehicle body frame 21 in the top-bottom direction of the vehicle body frame 21 changes and a positional relationship of the right front guard 87 to the right side part 54 and the right-foot-placing part 821 in the top-bottom direction of the vehicle body frame 21 does not change and that while the right front wheel 32 rotates about the right steering axis Y, the right front guard 87 does not rotate together with the right front wheel 32 and a positional relationship of the right front guard 87 to the right side part 54 and the right-foot-placing part 821 does not change.

In the leaning vehicle 1 described above, the left front guard 86 is supported by the left coupling part 812 between the left-foot-placing part 811 and the left front wheel 31 such that while the leaning vehicle 1 leans, the positional relationship of the left front guard 86 to the vehicle body frame 21 in the top-bottom direction of the vehicle body frame 21 changes and the positional relationship of the left front guard 86 to the left side part 53 and the left-foot-placing part 811 in the top-bottom direction of the vehicle body frame 21 does not change and that while the left front wheel 31 rotates about the left steering axis X, the left front guard 86 does not rotate together with the left front wheel 31 and the positional relationship of the left front guard 86 to the left side part 53 and the left-foot-placing part 811 does not change.

Accordingly, even in the case where the leaning vehicle 1 leans or the case where the left front wheel 31 rotates about the left steering axis X, the left foot of a driver placed on the left-foot-placing part 811 can be covered with the left front guard 86 from the front. Thus, it is possible to prevent the left foot of the driver from getting wet by water splashed on the left front wheel 31.

The right front guard 87 is supported by the right coupling part 822 between the right-foot-placing part 821 and the right front wheel 32 such that the positional relationship of the right front guard 87 to the vehicle body frame 21 in the top-bottom direction of the vehicle body frame 21 changes whereas the positional relationship of the right front guard 87 to the right side part 54 and the right-foot-placing part 821 in the top-bottom direction of the vehicle body frame 21 does not change while the leaning vehicle 1 leans and that the right front guard 87 does not rotate together with the right front wheel 32 and the positional relationship of the right front guard 87 to the right side part 54 and the right-foot-placing part 821 does not change while the right front wheel 32 rotates about the right steering axis Y.

Accordingly, even in the case where the leaning vehicle 1 leans or the case where the right front wheel 32 rotates about the right steering axis Y, the right foot of the driver placed on the right-foot-placing part 821 can be covered with the right front guard 87 from the front. Thus, it is possible to prevent the right foot of the driver from getting wet by water splashed on the right front wheel 32.

In addition, in the leaning vehicle 1 described above, the left front guard 86 is supported by the left coupling part 812 such that the left front guard 86 does not rotate together with the left front wheel 31 while the left front wheel 31 rotates about the left steering axis X. The right front guard 87 is supported by the right coupling part 822 such that the right front guard 87 does not rotate together with the right front wheel 32 while the right front wheel 32 rotates about the right steering axis Y. That is, in the leaning vehicle 1 described above, it is unnecessary to provide a space for allowing the left front guard 86 to rotate between the left front wheel 31 and the left coupling part 812 and a space for allowing the right front guard 87 to rotate between the right front wheel 32 and the right coupling part 822.

Thus, the left coupling part 812 does not need to be shifted rearward with respect to the left front wheel 31, and the right coupling part 822 does not need to be shifted rearward with respect to the right front wheel 32, either. Accordingly, the length of the vehicle in the front-rear direction can be reduced. As a result, the leaning vehicle 1 is allowed to have a compact configuration in the front-rear direction. The configuration described above eliminates the necessity for providing spaces for installing large-size front fenders above the left front wheel 31 and the right front wheel 32. Thus, the leaning vehicle 1 is allowed to have a compact configuration in the top-bottom direction.

As described above, the leaning vehicle 1 including the left front wheel 31 and the right front wheel 32 is allowed to be made compact and to have a configuration capable of preventing the feet of a driver from getting wet by water splashed on the left front wheel 31 and the right front wheel 32.

In addition, in a case where large-size front fenders are provided for the left front wheel 31 and the right front wheel 32, it is necessary to provide a space for allowing the left front wheel 31 and the front fender to rotate above the left front wheel 31 and a space for allowing the right front wheel 32 and the front fender to rotate above the right front wheel 32. In this case, the head pipe needs to be disposed not to interfere with these spaces. On the other hand, the left front guard 86 and the right front guard 87 as described in this embodiment are provided in the leaning vehicle 1 so that spaces as described above become unnecessary. Accordingly, the position of the head pipe 211 in the leaning vehicle 1 can be lowered. Thus, the barycenter of the frame can be lowered and the weight of the frame can be reduced. In addition, with the configuration of this embodiment, the position of the frame of the leaning vehicle 1 can be lowered, so that a driver can easily ride on the leaning vehicle 1.

In the leaning vehicle 1 according to this embodiment, the left front guard 86 extends along the left coupling part 812. The right front guard 87 extends along the right coupling part 822.

In the manner described above, the front of the left-foot-placing part 811 coupled to the left coupling part 812 can be more reliably covered with the left front guard 86. This can further ensure prevention of the left foot of the driver placed on the left-foot-placing part 811 from getting wet by water splashed on the left front wheel 31. The front of the right-foot-placing part 821 coupled to the right coupling part 822 can also be more reliably covered with the right front guard 87. This can further ensure prevention of the right foot of the driver placed on the right-foot-placing part 821 from getting wet by water splashed on the right front wheel 32.

In the leaning vehicle 1 according to this embodiment, the left front guard 86 overlaps with the left front wheel 31 when seen in the front-rear direction of the leaning vehicle 1 and overlaps with the left front wheel 31 when seen in the top-bottom direction of the leaning vehicle 1. The right front guard 87 overlaps with the right front wheel 32 when seen in the front-rear direction of the leaning vehicle 1 and overlaps with the right front wheel 32 when seen in the top-bottom direction of the leaning vehicle 1.

In the manner described above, a rear portion and an upper portion of the left front wheel 31 can be more reliably covered with the left front guard 86. Thus, the left front guard 86 can further ensure prevention of water splashed on the left front wheel 31 from spattering on the left foot of the driver. A rear portion and an upper portion of the right front wheel 32 can be more reliably covered with the right front guard 87. Thus, the right front guard 87 can further ensure prevention of water splashed on the right front wheel 32 from spattering on the right foot of the driver.

In the leaning vehicle 1 according to this embodiment, the left coupling part 812 is located at the rear of the left front wheel 31 and extends downward toward the rear from the left side part 53 along the left front wheel 31, a front portion of the left coupling part 812 is connected to the left side part 53, and a rear portion of the left coupling part 812 supports a front portion of the left-foot-placing part 811. The right coupling part 822 is located at the rear of the right front wheel 32 and extends downward toward the rear from the right side part 54 along the right front wheel 32, a front portion of the right coupling part 822 is connected to the right side part 54, and a rear portion of the right coupling part 822 supports a front portion of the right-foot-placing part 821.

In this manner, the gap between the left front wheel 31 and the left coupling part 812 can be reduced. Accordingly, the left front guard 86 attached to the left coupling part 812 can be disposed closer to the left front wheel 31. Thus, the left front guard 86 can further ensure prevention of water splashed on the left front wheel 31 from spattering on the left foot of the driver. In addition, the gap between the right front wheel 32 and the right coupling part 822 can be reduced. Accordingly, the right front guard 87 attached to the right coupling part 822 can be disposed closer to the right front wheel 32. Thus, the right front guard 87 can further ensure prevention of water splashed on the right front wheel 32 from spattering on the right foot of the driver.

In the leaning vehicle 1 according to this embodiment, the lower end of the left front guard 86 is located at the same height as or below the left-foot-placing face 811a of the left-foot-placing part 811. The lower end of the right front guard 87 is located at the same height as or below the right-foot-placing face 821a of the right-foot-placing part 821.

In this manner, the front of the left-foot-placing part 811 can be more reliably covered with the left front guard 86, and the front of the right-foot-placing part 821 can be more reliably covered with the right front guard 87. Accordingly, it is possible to prevent water splashed on the left front wheel 31 from spattering on the left foot of the driver from below the left front guard 86. It is also possible to prevent water splashed on the right front wheel 32 from spattering on the right foot of the driver from below the right front guard 87.

In the leaning vehicle 1 according to this embodiment, each of the left-foot-placing part 811 and the right-foot-placing part 821 has a waterproof structure that does not allow water to pass therethrough in the top-bottom direction. Accordingly, it is possible to prevent water splashed on the left front wheel 31 from passing through the left-foot-placing part 811 in the top-bottom direction and spattering on the left foot of the driver. In addition, it is also possible to prevent water splashed on the right front wheel 32 from passing through the right-foot-placing part 821 in the top-bottom direction and spattering on the right foot of the driver.

The leaning vehicle 1 according to this embodiment further includes: the left side guard 84 having a plate shape extending in the top-bottom direction and in the front-rear direction, attached to at least one of the left-foot-placing part 811 or the left coupling part 812 such that the left side guard 84 is located at the right of the left-foot-placing part 811, and configured to guard the left foot of a passenger; and the right side guard 85 having a plate shape extending in the top-bottom direction and in the front-rear direction, attached to at least one of the right-foot-placing part 821 or the right coupling part 822 such that the right side guard 85 is located at the left of the right-foot-placing part 821, and configured to guard the right foot of the passenger. The right end of the left-foot-placing part 811 is located further rightward than the left face 84a of the left side guard 84. The left end of the right-foot-placing part 821 is located further leftward than the right face 85a of the right side guard 85.

Accordingly, the right side guard 85 can prevent water splashed on the left front wheel 31 during traveling of the leaning vehicle 1 from spattering on the right foot of the driver, for example. Similarly, the left side guard 84 can prevent water splashed on the right front wheel 32 during traveling of the leaning vehicle 1 from spattering on the left foot of the driver, for example.

In addition, the right end of the left-foot-placing part 811 is located further rightward than the left face 84a of the left side guard 84. Accordingly, the left-foot-placing part 811 can more reliably cover the bottom of the left side guard 84. Thus, it is possible to prevent water splashed on the right front wheel 32 from spattering on the left foot of the driver from under the left-foot-placing part 811. The left end of the right-foot-placing part 821 is located further leftward than the right face 85a of the right side guard 85. Accordingly, the right-foot-placing part 821 can more reliably cover the bottom of the right side guard 85. Thus, it is possible to prevent water splashed on the left front wheel 31 from spattering on the right foot of the driver from under the right-foot-placing part 821.

### (Other Embodiments)

The embodiment of the present teaching has been described above, but the embodiment is merely an example for carrying out the present teaching. Thus, the present teaching is not limited to the embodiment described above, and the embodiment may be modified as necessary within a range not departing from the gist of the present teaching.

In the embodiment, the lower end of the left front guard 86 is located further downward than the front end of the left-foot-placing face 811a, and the lower end of the right front guard 87 is located further downward than the front end of the right-foot-placing face 821a. Alternatively, the lower end of the left front guard may be located further upward than the front end of the left-foot-placing face. The lower end of the right front guard may be located further upward than the front end of the right-foot-placing face.

In the embodiment, the right end of the left-foot-placing part 811 is located further rightward than the left face 84a of the left side guard 84, and the left end of the right-foot-placing part 821 is located further leftward than the right face 85a of the right side guard 85. Alternatively, the right end of the left-foot-placing part may be located further leftward than the left face of the left side guard. The left end of the right-foot-placing part may be located further leftward than the right face of the right side guard.

In the embodiment, the left-foot-placing part 811 and the right-foot-placing part 821 have plate shapes having no through holes to thereby constitute waterproof structures. Alternatively, the waterproof structures may include through holes in which the opening direction of openings located below the left-foot-placing part and the right-foot-placing part is rearward or the left-right direction such that water splashed on the wheels does not directly enter the through holes provided in the left-foot-placing part and the right-foot-placing part. The waterproof structures may be formed by providing covers over the openings of through holes. The waterproof structures may be different from each other between the left-foot-placing part and the right-foot-placing part.

In the embodiment, the leaning vehicle 1 includes the left side guard 84 and the right side guard 85. Alternatively, the leaning vehicle may not include the left side guard. The leaning vehicle may not include the right side guard.

In the embodiment, the left front guard 86 is attached to the front of the left coupling part 812. Alternatively, the left front guard may be attached to the rear of the left coupling part, or may be attached to the center of the left coupling part in the front-rear direction. In the embodiment, the right front guard 87 is attached to the front of the right coupling part 822. Alternatively, the right front guard may be attached to the rear of the right coupling part, or may be attached to the center of the right coupling part in the front-rear direction.

In the embodiment, at least one of the left front guard or the right front guard may have a structure that prevents water splashed on the front wheel from passing around the left and right ends of the front guard and spattering on the feet of the driver. Specifically, at least one of the left front guard or the right front guard may have bent portions that are bent forward at the left and right ends. Other members projecting forward may be provided at the left and right ends of at least one of the left front guard or the right front guard.

In the embodiment, the left-front-guard-first hook 86a and the pair of left-front-guard-second hooks 86b are engaged with the left coupling part 812 so that the left front guard 86 is thereby fixed to the left coupling part 812. Alternatively, the left front guard may be fixed to the left coupling part by a fastening member such as a bolt. The left front guard may be fixed to the left coupling part with, for example, an adhesive.

In the embodiment, the right-front-guard-first hook 87a and the pair of right-front-guard-second hooks 87b are engaged with the right coupling part 822 so that the right front guard 87 is thereby fixed to the right coupling part 822. Alternatively, the right front guard may be fixed to the right coupling part by a fastening member such as a bolt. The right front guard may be fixed to the right coupling part with, for example, an adhesive.

In the embodiment, the left-foot-placing part 811 and the left front guard 86 are separate components, and the right-foot-placing part 821 and the right front guard 87 are separate components. Alternatively, the left-foot-placing part 811 and the left front guard 86 may be one unit, and the right-foot-placing part 821 and the right front guard 87 may be one unit.

In the embodiment, the left-foot-placing part 811 and the left side guard 84 are separate components, and the right-foot-placing part 821 and the right side guard 85 are separate components. Alternatively, the left-foot-placing part 811 and the left side guard 84 may be one unit, and the right-foot-placing part 821 and the right side guard 85 may be one unit.

In the embodiment, the left front guard 86 and the left side guard 84 are separate components. The right front guard 87 and the right side guard 85 are separate components. Alternatively, the left front guard and the left side guard may be one unit. The right front guard and the right side guard may be one unit.

In the embodiment, the leaning vehicle 1 includes the left front fender 33 and the right front fender 34. Alternatively, the leaning vehicle may include only one of the left front fender or the right front fender, or may include none of the left front fender and the right front fender.

In the embodiment, the linkage mechanism 5 includes the upper cross part 51 and the lower cross part 52 whose intermediate portions in the left-right direction of the vehicle body frame 21 are rotatably supported by the head pipe 211. Alternatively, the linkage mechanism may have other configurations.

In the embodiment, the leaning vehicle 1 does not include a seat on which a driver is seated. Alternatively, the leaning vehicle may include a seat.

In the embodiment, the leaning vehicle 1 does not include a rear arm supporting the rear wheel 4. Alternatively, the leaning vehicle may include a rear arm supporting the rear wheel.

### REFERENCE SIGNS LIST

- 1: leaning vehicle
- 2: vehicle body
- 3: front wheel
- 4: rear wheel
- 5: linkage mechanism
- 6: steering mechanism
- 8: load transfer mechanism
- 21: vehicle body frame
- 22: power unit
- 211: head pipe
- 212: main frame
- 212a: main-frame-left-rear end
- 212b: main-frame-right-rear end
- 213: upper frame
- 213a: upper-frame-left-rear end
- 213b: upper-frame-right-rear end
- 214: under frame
- 214a: under-frame-front portion
- 214b: under-frame-rear portion
- 214c: under-frame-left-rear end
- 214d: under-frame-right-rear end
- 221: battery
- 25: main frame cover
- 31: left front wheel
- 32: right front wheel
- 33: left front fender
- 331: left-front-fender-attachment member
- 34: right front fender
- 341: right-front-fender-attachment member
- 41: wheel shaft
- 42: rear fender
- 45: license-plate-support member
- 51: upper cross part (cross part)
- 52: lower cross part (cross part)
- 53: left side part
- 54: right side part
- 61: left suspension part
- 62: right suspension part
- 65: steering member
- 651: handlebar
- 652: steering shaft
- 66: steering-force-transfer mechanism
- 81: left-foot-load-transfer part
- 811: left-foot-placing part (left foot step)
- 811a: left-foot-placing face
- 812: left coupling part (left-foot-step-coupling part)
- 82: right-foot-load-transfer part
- 821: right-foot-placing part (right foot step)
- 821a: right-foot-placing face
- 822: right coupling part (right-foot-step-coupling part)
- 83: left-right-coupling member
- 84: left side guard
- 84a: left face
- 85: right side guard
- 85a: right face
- 86: left front guard
- 86a: left-front-guard-first hook
- 86b: left-front-guard-second hook
- 87: right front guard
- 87a: right-front-guard-first hook
- 87b: right-front-guard-second hook
- 101: reflector
- 102: license plate
- X: left steering axis
- Y: right steering axis
- Z: intermediate steering axis
- UI: upper-intermediate-coupling axis
- UL: upper-left-coupling axis
- UR: upper-right-coupling axis
- DI: lower-intermediate-coupling axis
- DL: lower-left-coupling axis
- DR: lower-right-coupling axis

## Claims

1. A leaning vehicle (1) configured to lean leftward when turning to the left and lean rightward when turning to the right, comprising:
a vehicle body frame (21);
a linkage mechanism (5) supported by the vehicle body frame (21) and including a cross part (51, 52) comprising an upper cross part (51), a lower cross part (52) and extending in a left-right direction of the vehicle body frame (21), a left side part (53), and a right side part (54), a left end of the cross part (51, 52) being rotatably coupled to the left side part (53), a right end of the cross part (51, 52) being rotatably coupled to the right side part (54);
a left front wheel (31) supported by the left side part (53) to be rotatable about a left steering axis (X) and to be non-displaceable in an axial direction of the left steering axis (X);
a right front wheel (32) supported by the right side part (54) to be rotatable about a right steering axis (Y) and to be non-displaceable in an axial direction of the right steering axis (Y);
a left foot step (811) located further rearward than the left front wheel (31) and having a left-foot-placing face (81 1a) on which a left foot of a driver is to be placed;
a right foot step (821) located further rearward than the right front wheel (32) and having a right-foot-placing face (821a) on which a right foot of the driver is to be placed;
a left-foot-step-coupling part (812) coupling the left foot step (811) to the left side part (53); and
a right-foot-step-coupling part (822) coupling the right foot step (821) to the right side part (54),
**characterized in that** the leaning vehicle (1) comprises:
a left front guard (86) supported by the left-foot-step-coupling part (812) between the left foot step (811) and the left front wheel (31); and
a right front guard (87) supported by the right-foot-step-coupling part (822) between the right foot step (821) and the right front wheel (32),
wherein, when the vehicle body frame (21) leans to the left of the leaning vehicle (1), the left side part (53) of the linkage mechanism (5) is located, by the linkage mechanism (5), further upward than the right side part (54) in the top-bottom direction of the vehicle body frame (21); and
when the vehicle body frame (21) leans to the right of the leaning vehicle (1), the right side part (54) of the linkage mechanism (5) is located, by the linkage mechanism (5), further upward than the left side part (53) in the top-bottom direction of the vehicle body frame (21),
wherein, the left front guard ( 86) is supported, such that,
while the leaning vehicle (1) leans, a positional relationship of the left front guard (86) to the vehicle body frame (21) in a top-bottom direction of the vehicle body frame (21) changes by the linkage mechanism (5) and a positional relationship of the left front guard (86) to the left side part (53) and the left foot step (811) in the top-bottom direction of the vehicle body frame (21) does not change; and
while the left front wheel (31) rotates about the left steering axis (X), the left front guard (86) does not rotate together with the left front wheel (31) and a positional relationship of the left front guard (86) to the left side part (53) and the left foot step (811) does not change, and;
the right front guard ( 87) is supported, such that, while the leaning vehicle (1) leans, a positional relationship of the right front guard (87) to the vehicle body frame (21) in the top-bottom direction of the vehicle body frame (21) changes by the linkage mechanism (5) and a positional relationship of the right front guard (87) to the right side part (54) and the right foot step (821) in the top-bottom direction of the vehicle body frame (21) does not change, and
while the right front wheel (32) rotates about the right steering axis (Y), the right front guard (87) does not rotate together with the right front wheel (32) and a positional relationship of the right front guard (87) to the right side part (54) and the right foot step (821) does not change.

2. The leaning vehicle (1) according to claim 1, wherein
the left front guard (86) extends along the left-foot-step-coupling part (812), and
the right front guard (87) extends along the right-foot-step-coupling part (822).

3. The leaning vehicle (1) according to claim 2, wherein
the left front guard (86) overlaps with the left front wheel (31) when seen in a front-rear direction of the leaning vehicle (1) and overlaps with the left front wheel (31) when seen in a top-bottom direction of the leaning vehicle (1), and
the right front guard (87) overlaps with the right front wheel (32) when seen in the front-rear direction of the leaning vehicle (1) and overlaps with the right front wheel (32) when seen in the top-bottom direction of the leaning vehicle (1).

4. The leaning vehicle (1) according to any one of claims 1 to 3, wherein
the left-foot-step-coupling part (812) is located at the rear of the left front wheel (31), and extends downward toward the rear from the left side part (53) along the left front wheel (31), a front portion of the left-foot-step-coupling part (812) being connected to the left side part (53), a rear portion of the left-foot-step-coupling part (812) supporting a front portion of the left foot step (811), and
the right-foot-step-coupling part (822) is located at the rear of the right front wheel (32), and extends downward toward the rear from the right side part (54) along the right front wheel (32), a front portion of the right-foot-step-coupling part (822) being connected to the right side part (54), a rear portion of the right-foot-step-coupling part (822) supporting a front portion of the right foot step (821).

5. The leaning vehicle (1) according to any one of claims 1 to 4, wherein
a lower end of the left front guard (86) is located at the same height as or below a front end of the left-foot-placing face (81 1a) of the left foot step (811), and
a lower end of the right front guard (87) is located at the same height as or below a front end of the right-foot-placing face (821a) of the right foot step (821).

6. The leaning vehicle (1) according to any one of claims 1 to 5, wherein
each of the left foot step (811) and the right foot step (821) has a waterproof structure that does not allow water from passing through the structure in the top-bottom direction.

7. The leaning vehicle (1) according to any one of claims 1 to 6, further comprising:
a left side guard (84) having a plate shape extending in the top-bottom direction and a front-rear direction, attached to at least one of the left foot step (811) or the left-foot-step-coupling part (812) such that the left side guard (84) is located at the right of the left foot step (811), and is configured to guard the left foot of the driver; and
a right side guard (85) having a plate shape extending in the top-bottom direction and the front-rear direction, attached to at least one of the right foot step (821) or the right-foot-step-coupling part (822) such that the right side guard (85) is located at the left of the right foot step (821), and is configured to guard the right foot of the driver, wherein
a right end of the left foot step (811) is located further rightward than a left face (84c) of the left side guard (84), and
a left end of the right foot step (821) is located further leftward than a right face (85a) of the right side guard (85).

## Patentansprüche

1. Ein Neigungsfahrzeug (1), das dazu konfiguriert ist, sich nach links zu neigen, wenn dasselbe nach links fährt, und sich nach rechts zu neigen, wenn dasselbe nach rechts fährt, wobei das Neigungsfahrzeug (1) folgende Merkmale aufweist:
einen Fahrzeugkörperrahmen (21);
einen Verbindungsmechanismus (5), der von dem Fahrzeugkörperrahmen (21) getragen wird und ein Kreuzungsteil (51, 52), das ein oberes Kreuzungsteil (51), ein unteres Kreuzungsteil (52) aufweist und sich in einer Links-Rechts-Richtung des Fahrzeugkörperrahmens (21) erstreckt, ein linkes Seitenteil (53) und ein rechtes Seitenteil (54) umfasst, wobei ein linkes Ende des Kreuzungsteils (51, 52) drehbar an das linke Seitenteil (53) gekoppelt ist, wobei ein rechtes Ende des Kreuzungsteils (51, 52) drehbar an das rechte Seitenteil (54) gekoppelt ist;
ein linkes Vorderrad (31), das von dem linken Seitenteil (53) so getragen wird, dass dasselbe um eine linke Lenkachse (X) drehbar ist und in einer Axialrichtung der linken Lenkachse (X) nicht verschiebbar ist;
ein rechtes Vorderrad (32), das von dem rechten Seitenteil (54) so getragen wird, dass dasselbe um eine rechte Lenkachse (Y) drehbar ist und in einer Axialrichtung der rechten Lenkachse (Y) nicht verschiebbar ist;
eine linke Fußstütze (811), die sich weiter hinten als das linke Vorderrad (31) befindet und eine Linker-Fuß-Platzierungsfläche (811a) aufweist, auf der ein linker Fuß eines Fahrers zu platzieren ist;
eine rechte Fußstütze (821), die sich weiter hinten als das rechte Vorderrad (32) befindet und eine Rechter-Fuß-Platzierungsfläche (821a) aufweist, auf der ein rechter Fuß eines Fahrers zu platzieren ist;
ein Linke-Fußstütze-Kopplungsteil (812), der die linke Fußstütze (811) an das linke Seitenteil (53) koppelt; und
ein Rechte-Fußstütze-Kopplungsteil (822), der die rechte Fußstütze (821) an das rechte Seitenteil (54) koppelt,
**dadurch gekennzeichnet, dass** das Neigungsfahrzeug (1) folgende Merkmale aufweist:
einen linken Vorderschutz (86), der von dem Linke-Fußstütze-Kopplungsteil (812) zwischen der linken Fußstütze (811) und dem linken Vorderrad (31) getragen wird; und
einen rechten Vorderschutz (87), der von dem Rechte-Fußstütze-Kopplungsteil (822) zwischen der rechten Fußstütze (821) und dem rechten Vorderrad (32) getragen wird,
wobei, wenn sich der Fahrzeugkörperrahmen (21) zur linken Seite des Neigungsfahrzeugs (1) neigt, sich das linke Seitenteil (53) des Verbindungsmechanismus (5) mittels des Verbindungsmechanismus (5) in der Oben-Unten-Richtung des Fahrzeugkörperrahmens (21) weiter oben als das rechte Seitenteil (54) befindet; und
wenn sich der Fahrzeugkörperrahmen (21) zur rechten Seite des Neigungsfahrzeugs (1) neigt, sich das rechte Seitenteil (54) des Verbindungsmechanismus (5) durch den Verbindungsmechanismus (5) in der Oben-Unten-Richtung des Fahrzeugkörperrahmens (21) weiter oben als das linke Seitenteil (53) befindet,
wobei der linke Vorderschutz (86) derart getragen wird, dass,
während sich das Neigungsfahrzeug (1) neigt, sich eine Positionsbeziehung des linken Vorderschutzes (86) zu dem Fahrzeugkörperrahmen (21) in einer Oben-Unten-Richtung des Fahrzeugkörperrahmens (21) durch den Verbindungsmechanismus (5) verändert und sich eine Positionsbeziehung des linken Vorderschutzes (86) zu dem linken Seitenteil (53) und der linken Fußstütze (811) in der Oben-Unten-Richtung des Fahrzeugkörperrahmens (21) nicht verändert; und
während sich das linke Vorderrad (31) um die linke Lenkachse (X) dreht, der linke Vorderschutz (86) sich nicht zusammen mit dem linken Vorderrad (31) dreht und sich eine Positionsbeziehung des linken Vorderschutzes (86) zu dem linken Seitenteil (53) und der linken Fußstütze (811) nicht verändert, und;
der rechte Vorderschutz (87) derart getragen wird, dass,
während sich das Neigungsfahrzeug (1) neigt, sich eine Positionsbeziehung des rechten Vorderschutzes (87) zu dem Fahrzeugkörperrahmen (21) in einer Oben-Unten-Richtung des Fahrzeugkörperrahmens (21) durch den Verbindungsmechanismus (5) verändert und sich eine Positionsbeziehung des rechten Vorderschutzes (87) zu dem rechten Seitenteil (54) und der rechten Fußstütze (821) in der Oben-Unten-Richtung des Fahrzeugkörperrahmens (21) nicht verändert; und
während sich das rechte Vorderrad (32) um die rechte Lenkachse (Y) dreht, der rechte Vorderschutz (87) sich nicht zusammen mit dem rechten Vorderrad (32) dreht und sich eine Positionsbeziehung des rechten Vorderschutzes (87) zu dem rechten Seitenteil (54) und der rechten Fußstütze (821) nicht verändert.

2. Das Neigungsfahrzeug (1) gemäß Anspruch 1, bei dem
sich der linke Vorderschutz (86) entlang dem Linke-Fußstütze-Kopplungsteil (812) erstreckt und
sich der rechte Vorderschutz (87) entlang dem Rechte-Fußstütze-Kopplungsteil (822) erstreckt.

3. Das Neigungsfahrzeug (1) gemäß Anspruch 2, bei dem
der linke Vorderschutz (86) bei Betrachtung in einer Vorne-Hinten-Richtung des Neigungsfahrzeugs (1) das linke Vorderrad (31) überlappt und bei Betrachtung in einer Oben-Unten-Richtung des Neigungsfahrzeugs (1) das linke Vorderrad (31) überlappt, und
der rechte Vorderschutz (87) bei Betrachtung in einer Vorne-Hinten-Richtung des Neigungsfahrzeugs (1) das rechte Vorderrad (32) überlappt und bei Betrachtung in einer Oben-Unten-Richtung des Neigungsfahrzeugs (1) das rechte Vorderrad (32) überlappt.

4. Das Neigungsfahrzeug (1) gemäß einem der Ansprüche 1 bis 3, bei dem
sich das Linke-Fußstütze-Kopplungsteil (812) hinter dem linken Vorderrad (31) befindet und sich von dem linken Seitenteil (53) abwärts nach hinten entlang dem linken Vorderrad (31) erstreckt, wobei ein Abschnitt des Linke-Fußstütze-Kopplungsteils (812) mit dem linken Seitenteil (53) verbunden ist, wobei ein hinterer Abschnitt des Linke-Fußstütze-Kopplungsteils (812) einen vorderen Abschnitt der linken Fußstütze (811) trägt, und
sich das Rechte-Fußstütze-Kopplungsteil (822) hinter dem rechten Vorderrad (32) befindet und sich von dem rechten Seitenteil (54) abwärts nach hinten entlang dem rechten Vorderrad (32) erstreckt, wobei ein Abschnitt des Rechte -Fußstütze-Kopplungsteils (822) mit dem rechten Seitenteil (54) verbunden ist, wobei ein hinterer Abschnitt des Rechte-Fußstütze-Kopplungsteils (822) einen vorderen Abschnitt der rechten Fußstütze (821) trägt.

5. Das Neigungsfahrzeug (1) gemäß einem der Ansprüche 1 bis 4, bei dem
sich ein unteres Ende des linken Vorderschutzes (86) auf der gleichen Höhe wie oder unterhalb eines vorderen Endes der Linker-Fuß-Platzierungsfläche (811a) der linken Fußstütze (811) befindet, und
sich ein unteres Ende des rechten Vorderschutzes (87) auf der gleichen Höhe wie oder unterhalb eines vorderen Endes der Rechter-Fuß-Platzierungsfläche (821a) der rechten Fußstütze (821) befindet.

6. Das Neigungsfahrzeug (1) gemäß einem der Ansprüche 1 bis 5, bei dem
jede der linken Fußstütze (811) und der rechten Fußstütze (821) eine wasserdichte Struktur aufweist, die es Wasser nicht ermöglicht, die Struktur in einer Oben-Unten-Richtung zu durchlaufen.

7. Das Neigungsfahrzeug (1) gemäß einem der Ansprüche 1 bis 6, das ferner folgende Merkmale aufweist:
einen linken Seitenschutz (84) mit einer Plattenforrn, die sich in der Oben-Unten-Richtung und einer Vorne-Hinten-Richtung erstreckt, der an zumindest einer der linken Fußstütze (811) oder des Linke-Fußstütze-Kopplungsteils (812) derart angebracht ist, dass sich der linke Seitenschutz (84) rechts von der linken Fußstütze (811) befindet, und dazu konfiguriert ist, den linken Fuß des Fahrers zu schützen; und
einen rechten Seitenschutz (85) mit einer Plattenform, die sich in der Oben-Unten-Richtung und einer Vorne-Hinten-Richtung erstreckt, der an zumindest einer der rechten Fußstütze (821) oder des Rechte-Fußstütze-Kopplungsteils (822) derart angebracht ist, dass sich der rechte Seitenschutz (85) links von der rechten Fußstütze (821) befindet, und dazu konfiguriert ist, den rechten Fuß des Fahrers zu schützen, wobei
sich ein rechtes Ende der linken Fußstütze (811) weiter rechts befindet als eine linke Fläche (84c) des linken Seitenschutzes (84), und
sich ein linkes Ende der linken Fußstütze (821) weiter links befindet als eine rechte Fläche (85c) des rechten Seitenschutzes (85).

## Revendications

1. Véhicule à inclinaison (1) configuré pour s'incliner vers la gauche lors d'un virage à gauche et pour s'incliner vers la droite lors d'un virage à droite, comprenant:
un châssis de carrosserie de véhicule (21);
un mécanisme de liaison (5) supporté par le châssis de carrosserie (21) du véhicule et comportant une partie transversale (51, 52) comprenant une partie transversale supérieure (51), une partie transversale inférieure (52) et s'étendant dans une direction gauche-droite du châssis de carrosserie de véhicule (21), une partie latérale gauche (53) et une partie latérale droite (54), et une extrémité gauche de la partie transversale (51, 52) étant couplée de manière rotative à la partie latérale gauche (53), une extrémité droite de la partie transversale (51, 52) étant couplée de manière rotative à la partie latérale droite (54);
une roue avant gauche (31) supportée par la partie latérale gauche (53) de manière à pouvoir tourner autour d'un axe de direction gauche (X) et à ne pas pouvoir se déplacer dans une direction axiale de l'axe de direction gauche (X);
une roue avant droite (32) supportée par la partie latérale droite (54) de manière à pouvoir tourner autour d'un axe de direction droit (Y) et à ne pas pouvoir se déplacer dans une direction axiale de l'axe de direction droit (Y);
un marchepied gauche (811) situé plus en arrière que la roue avant gauche (31) et présentant une face de placement du pied gauche (811a) sur laquelle doit être placé le pied gauche d'un conducteur;
un marchepied droit (821) situé plus en arrière que la roue avant droite (32) et présentant une face de placement du pied droit (821a) sur laquelle doit être placé un pied droit du conducteur;
une partie de couplage de marchepied gauche (812) couplant le marchepied gauche (811) à la partie latérale gauche (53); et
une partie de couplage de marchepied droit (822) couplant le marchepied droit (821) à la partie latérale droite (54),
**caractérisé par le fait que** le véhicule à inclinaison (1) comprend:
une protection avant gauche (86) supportée par la partie de couplage de marchepied gauche (812) entre le marchepied gauche (811) et la roue avant gauche (31); et
une protection avant droite (87) supportée par la partie de couplage de marchepied droit (822) entre le marchepied droit (821) et la roue avant droite (32),
dans lequel, lorsque le châssis de carrosserie (21) s'incline vers la gauche du véhicule à inclinaison (1), la partie latérale gauche (53) du mécanisme de liaison (5) est située, par le mécanisme de liaison (5), plus vers le haut que la partie latérale droite (54) dans la direction de haut en bas du châssis de carrosserie de véhicule (21); et
lorsque le châssis de carrosserie (21) s'incline vers la droite du véhicule à inclinaison (1), la partie latérale droite (54) du mécanisme de liaison (5) est située, par le mécanisme de liaison (5), plus vers le haut que le partie latérale gauche (53) dans la direction de haut en bas du châssis de carrosserie (21),
dans lequel la protection avant gauche (86) est supportée de sorte que,
tandis que s'incline le véhicule à inclinaison (1), un rapport de position de la protection avant gauche (86) par rapport au châssis de carrosserie (21) dans une direction de haut en bas du châssis de carrosserie (21) change par le mécanisme de liaison (5) et un rapport de position de la protection avant gauche (86) par rapport à la partie latérale gauche (53) et au marchepied gauche (811) dans la direction de haut en bas du châssis de carrosserie de véhicule (21) ne change pas; et
tandis que la roue avant gauche (31) tourne autour de l'axe de direction gauche (X), la protection avant gauche (86) ne tourne pas ensemble avec la roue avant gauche (31) et une rapport de position de la protection avant gauche (86) par rapport à la partie latérale gauche (53) et le marchepied gauche (811) ne change pas: et
la protection avant droite (87) est supportée de sorte que
tandis que s'incline le véhicule à inclinaison (1), un rapport de position de la protection avant droite (87) par rapport au châssis de carrosserie (21) dans la direction de haut en bas du châssis de carrosserie (21) change par le mécanisme de liaison (5) et un rapport de position de la protection avant droite (87) par rapport à la partie latérale droite (54) et au marchepied droit (821) dans la direction de haut en bas du châssis de carrosserie (21) du véhicule ne change pas, et
tandis que la roue avant droite (32) tourne autour de l'axe de direction droit (Y), la protection avant droite (87) ne tourne pas ensemble avec la roue avant droite (32) et un rapport de position de la protection avant droite (87) par rapport à la partie latérale droite (54) et le marchepied droit (821) ne change pas.

2. Véhicule à inclinaison (1) selon la revendication 1, dans lequel
la protection avant gauche (86) s'étend le long de la partie de couplage du marchepied gauche (812), et
la protection avant droite (87) s'étend le long de la partie de couplage du marchepied droit (822).

3. Véhicule à inclinaison (1) selon la revendication 2, dans lequel
la protection avant gauche (86) vient en chevauchement avec la roue avant gauche (31), lorsque vue dans une direction avant-arrière du véhicule à inclinaison (1), et vient en chevauchement avec la roue avant gauche (31), lorsque vue dans une direction de haut en bas du véhicule à inclinaison (1), et
la protection avant droite (87) vient en chevauchement avec la roue avant droite (32), lorsque vue dans la direction avant-arrière du véhicule à inclinaison (1), et vient en chevauchement avec la roue avant droite (32), lorsque vue dans la direction de haut en bas du véhicule à inclinaison (1).

4. Véhicule à inclinaison (1) selon l'une quelconque des revendications 1 à 3, dans lequel
la partie de couplage du marchepied gauche (812) est située à l'arrière de la roue avant gauche (31) et s'étend vers le bas vers l'arrière de la partie latérale gauche (53) le long de la roue avant gauche (31), une partie avant de la partie de couplage du marchepied gauche (812) étant connectée à la partie latérale gauche (53), une partie arrière de la partie de couplage du marchepied gauche (812) supportant une partie avant du marchepied gauche (811), et
la partie de couplage du marchepied droit (822) est située à l'arrière de la roue avant droite (32) et s'étend vers le bas vers l'arrière de la partie latérale droite (54) le long de la roue avant droite (32), une partie avant de la partie de couplage du marchepied droit (822) étant connectée à la partie latérale droite (54), une partie arrière de la partie de couplage du marchepied droit (822) supportant une partie avant du marchepied droit (821).

5. Véhicule à inclinaison (1) selon l'une quelconque des revendications 1 à 4, dans lequel
une extrémité inférieure de la protection avant gauche (86) est située à la même hauteur ou au-dessous d'une extrémité avant de la face de placement du pied gauche (811a) du marchepied gauche (811), et
une extrémité inférieure de la protection avant droite (87) est située à la même hauteur ou au-dessous d'une extrémité avant de la face de placement du pied droit (821a) du marchepied droit (821).

6. Véhicule à inclinaison (1) selon l'une quelconque des revendications 1 à 5, dans lequel
chacun parmi le marchepied gauche (811) et le marchepied droit (821) présente une structure étanche à l'eau qui ne permet pas que de l'eau passe à travers la structure dans la direction de haut en bas.

7. Véhicule à inclinaison (1) selon l'une quelconque des revendications 1 à 6, comprenant par ailleurs:
une protection latérale gauche (84) présentant une forme de plaque s'étendant dans la direction de haut en bas et dans une direction avant-arrière, fixée à au moins l'un parmi le marchepied gauche (811) et/ou la partie de couplage du marchepied gauche (812) de sorte que la protection latérale gauche (84) soit située à droite du marchepied gauche (811), et soit configurée pour protéger le pied gauche du conducteur; et
une protection latérale droite (85) présentant une forme de plaque s'étendant dans la direction de haut en bas et dans la direction avant-arrière, fixée à au moins l'un parmi le marche pied droit (821) et/ou la partie de couplage du marchepied droit (822) de sorte que la protection latérale droite (85) soit située à gauche du marchepied droit (821), et soit configurée pour protéger le pied droit du conducteur,
dans lequel
une extrémité droite du marchepied gauche (811) est située plus à droite qu'une face gauche (84c) de la protection latérale gauche (84), et
une extrémité gauche du marchepied droit (821) est située plus à gauche qu'une face droite (85a) de la protection latérale droite (85).
